# EUROPEAN PATENT APPLICATION

(11) **EP 4 596 998 A1**
(43) Date of publication of application: **06.08.2025**
(21) Application number: 23872436.3
(22) Date of filing: 27.09.2023
(51) Int. Cl.: F25B 7/00, F25B 1/00

(54) **REFRIGERATION CYCLE DEVICE**

(30) Priority: 30.09.2022 JP 2022159012
(71) Applicant: DAIKIN INDUSTRIES, LTD., Osaka-shi, Osaka 530-0001 (JP)
(72) Inventor: IYOSHI, Yuta, Osaka-shi, Osaka 530-0001 (JP); YAMANOI, Yoshiki, Osaka-shi, Osaka 530-0001 (JP)
(74) Representative: Hoffmann Eitle
(86) International application number: PCT/JP2023/035187
(87) International publication number: WO 2024/071214

(57) **Abstract**

A refrigeration cycle apparatus (1) includes: a first circuit (Sa) that circulates a first refrigerant; a second circuit (10) that circulates a carbon dioxide refrigerant and refrigerating machine oil; a cascade heat exchanger (35) that heats the carbon dioxide refrigerant with the first refrigerant; and a control unit (80). The second circuit includes: a second compressor; a container that is provided on the suction side of the second compressor and that stores the carbon dioxide refrigerant and the refrigerator oil; a suction pipe (23a) that connects the suction side of the second compressor to the container; an oil return passage (23b) for returning the refrigerating machine oil from a lower portion of the container to the suction pipe; and a valve in the oil return passage. The control unit performs startup control to open the oil return valve after starting the circulation of the first refrigerant in the first circuit.

## Description

### TECHNICAL FIELD

The present disclosure relates to a refrigeration cycle apparatus.

### BACKGROUND ART

Patent Literature 1 (Japanese Patent No. 5425221) discloses a refrigeration cycle apparatus including a refrigerant circuit in which an outdoor unit and an indoor unit are connected by a gas pipe and a liquid pipe and through which a refrigerant circulates. Carbon dioxide (CO₂) as refrigerant and polyalkylene glycol (PAG) oil, which is incompatible with carbon dioxide, as refrigerating machine oil are sealed in the refrigerant circuit.

### SUMMARY OF THE INVENTION

### <Technical Problem>

As disclosed in Patent Literature 1, in the refrigeration cycle apparatus using the carbon dioxide refrigerant, when the refrigerating machine oil incompatible with the carbon dioxide refrigerant is used, the density of the refrigerating machine oil becomes smaller than the density of the refrigerant, in the low temperature range of the carbon dioxide refrigerant. In this case, since the liquid refrigerant accumulates at the lower portion of an accumulator, the liquid refrigerant flows into the compressor.

### <Solution to Problem>

A refrigeration cycle apparatus according to a first aspect includes a first circuit, a second circuit, a cascade heat exchanger, and a control unit. The first circuit circulates a first refrigerant. The second circuit circulates a carbon dioxide refrigerant and refrigerating machine oil. The cascade heat exchanger heats the carbon dioxide refrigerant with the first refrigerant. The second circuit includes a second compressor, a container, a suction pipe, an oil return passage, and a valve. The container is provided on a suction side of the second compressor and stores the carbon dioxide refrigerant and the refrigerating machine oil. The suction pipe connects the suction side of the second compressor to the container. The oil return passage returns the refrigerating machine oil from the lower portion of the container to the suction pipe. The valve is provided in the oil return passage. The control unit performs startup control to open the valve after starting the circulation of the first refrigerant in the first circuit.

At the startup of the operation in which the carbon dioxide refrigerant is heated by the first refrigerant, the temperature of the carbon dioxide refrigerant in the container may be low due to low outside air temperature. In such a case, the refrigeration cycle apparatus according to the first aspect can raise the temperature of the carbon dioxide refrigerant in the container of the second circuit via the cascade heat exchanger by starting the circulation of the first refrigerant in the first circuit. Therefore, when the outside air temperature is low, the interior of the container can be brought into a normal state in which the density of the carbon dioxide refrigerant is lower than the density of the refrigerating machine oil. Since the valve in the oil return passage extending from the lower portion of the container is opened after the normal state is reached, it is possible to suppress the liquid-phase carbon dioxide refrigerant (hereinafter, also referred to as "liquid refrigerant") from flowing into the oil return passage. Therefore, the inflow of liquid refrigerant into the second compressor can be suppressed.

A refrigeration cycle apparatus according to a second aspect is the refrigeration cycle apparatus according to the first aspect, in which the control unit opens the valve when a temperature or pressure of the carbon dioxide refrigerant and the refrigerating machine oil in the container becomes equal to or higher than a predetermined temperature or predetermined pressure corresponding to a boundary temperature at which a density of the carbon dioxide refrigerant and a density of the refrigerating machine oil in the container become equal.

In the refrigeration cycle apparatus according to the second aspect, when the temperature or pressure of the carbon dioxide refrigerant and the refrigerating machine oil in the container becomes equal to or higher than the predetermined temperature or predetermined pressure corresponding to the boundary temperature at which the density of the carbon dioxide refrigerant and the density of the refrigerating machine oil in the container are equal to each other, it can be determined that the density of the refrigerant and the density of the refrigerating machine oil in the container are in a normal state. Therefore, the inflow of liquid refrigerant into the second compressor can be further suppressed.

A refrigeration cycle apparatus according to a third aspect is the refrigeration cycle apparatus according to the first or second aspect, in which the control unit starts the circulation of the carbon dioxide refrigerant in the second circuit after starting the circulation of the first refrigerant in the first circuit.

In the refrigeration cycle apparatus according to the third aspect, by starting the circulation of the first refrigerant in the first circuit, the temperature of the refrigerant in the container of the second circuit is raised via the cascade heat exchanger, and then the circulation of the carbon dioxide refrigerant in the second circuit is started. Therefore, the efficiency of the operation of the second circuit can be improved.

A refrigeration cycle apparatus according to a fourth aspect is the refrigeration cycle apparatus according to the third aspect, in which the control unit opens the valve after starting the circulation of the carbon dioxide refrigerant in the second circuit.

In the refrigeration cycle apparatus according to the fourth aspect, the first refrigerant circulates in the first circuit and the carbon dioxide refrigerant circulates in the second circuit, so that the temperature of the carbon dioxide refrigerant in the container can be efficiently raised. This makes it easy to bring the density of the refrigerant and the density of the refrigerating machine oil in the container into a normal state. Since the valve in the oil return passage is opened after the normal state is reached, the inflow of liquid refrigerant into the second compressor can be easily suppressed.

A refrigeration cycle apparatus according to a fifth aspect is the refrigeration cycle apparatus according to the first or second aspect, in which the control unit simultaneously starts operation of the first circuit and operation of the second circuit.

As in the refrigeration cycle apparatus according to the fifth aspect, the circulation of the first refrigerant in the first circuit and the circulation of the carbon dioxide refrigerant in the second circuit may be performed simultaneously.

A refrigeration cycle apparatus according to a sixth aspect is any one of the refrigeration cycle apparatuses according to the first to fifth aspects, in which the control unit performs the startup control when outside air temperature is equal to or lower than a first temperature, and does not perform the startup control when the outside air temperature exceeds the first temperature.

In the refrigeration cycle apparatus according to the sixth aspect, if the density of the refrigerant and the density of the refrigerating machine oil in the container are in an abnormal state due to the outside air temperature being equal to or lower than the first temperature, the inflow of liquid refrigerant into the second compressor can be suppressed by performing the startup control. Meanwhile, in a case where the density of the refrigerant and the density of the refrigerating machine oil in the container are in a normal state due to the outside air temperature exceeding the first temperature, the inflow of liquid refrigerant into the second compressor can be suppressed without closing the valve in the oil return passage.

A refrigeration cycle apparatus according to a seventh aspect is the refrigeration cycle apparatus according to the sixth aspect, in which the control unit simultaneously starts operation of the first circuit, operation of the second circuit, and opening of the valve when the outside air temperature exceeds the first temperature.

In the refrigeration cycle apparatus according to the seventh aspect, in a case where the density of the refrigerant and the density of the refrigerating machine oil in the container are in an abnormal state due to the outside air temperature being equal to or lower than the first temperature, by opening the valve after starting the operation of the first circuit, it is possible to suppress the inflow of liquid refrigerant into the second compressor. Meanwhile, in a case where the density of the refrigerant and the density of the refrigerating machine oil in the container are in a normal state due to the outside air temperature exceeding the first temperature, the start of operation of the first circuit, the start of operation of the second circuit, and the opening of the valve in the oil return passage may be performed simultaneously.

A refrigeration cycle apparatus according to an eighth aspect is any one of the refrigeration cycle apparatuses according to the first to seventh aspects, in which the first refrigerant includes R32, R454C, propane, R1234yf, R1234ze, or ammonia.

In the refrigeration cycle apparatus according to the eighth aspect, the circulation of the first refrigerant including R32, R454C, propane, R1234yf, R1234ze, or ammonia in the first circuit allows efficient heat exchange with the carbon dioxide refrigerant in the cascade heat exchanger.

### BRIEF DESCRIPTION OF THE DRAWINGS

FIG. 1 is a schematic configuration diagram of a refrigeration cycle apparatus.
FIG. 2 is a schematic functional block diagram of the refrigeration cycle apparatus.
FIG. 3 illustrates the behavior (flow of refrigerant) of the refrigeration cycle apparatus during full cooling operation.
FIG. 4 illustrates the behavior (flow of refrigerant) of the refrigeration cycle apparatus during full heating operation.
FIG. 5 illustrates the behavior (flow of refrigerant) of the refrigeration cycle apparatus during cooling-main operation.
FIG. 6 illustrates the behavior (flow of refrigerant) of the refrigeration cycle apparatus during heating-main operation.
FIG. 7 illustrates a control flow at the startup of the full heating operation and heating-main operation of the refrigeration cycle apparatus.
FIG. 8 illustrates a control flow at the startup of the full heating operation and heating-main operation of the refrigeration cycle apparatus according to a modification.
FIG. 9 illustrates a control flow at the startup of the full heating operation and heating-main operation of the refrigeration cycle apparatus according to a modification.
FIG. 10 illustrates a control flow at the startup of the full heating operation and heating-main operation of the refrigeration cycle apparatus according to a modification.

### DESCRIPTION OF EMBODIMENTS

### (1) Configuration of refrigeration system

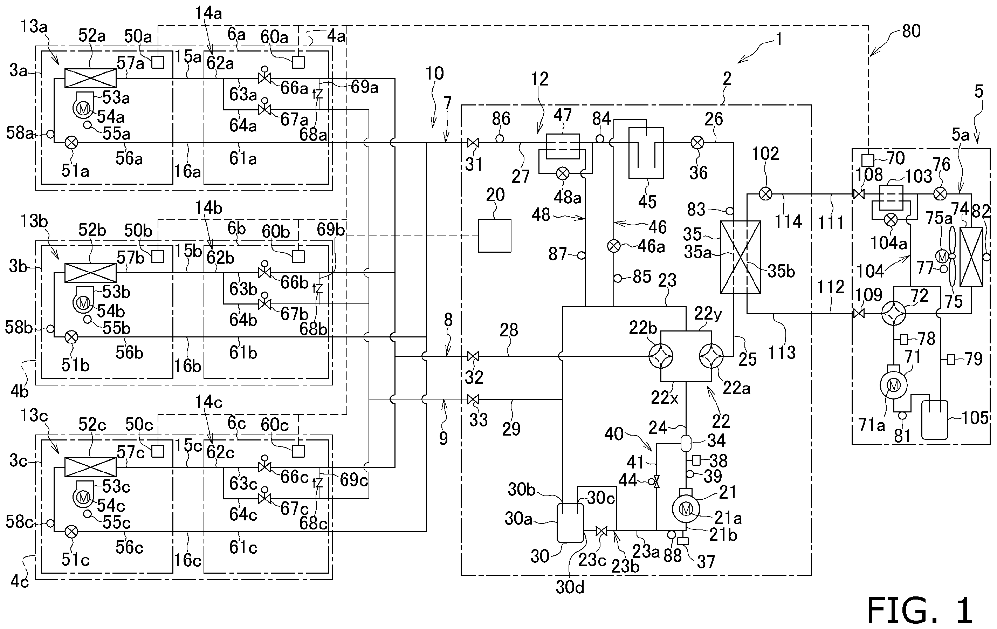

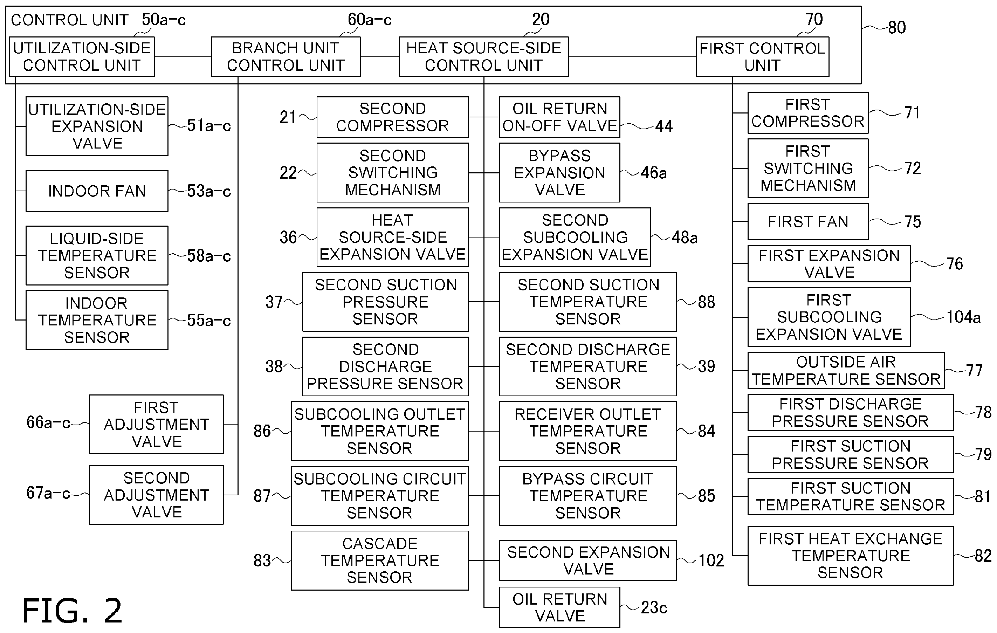

A refrigeration cycle apparatus 1 illustrated in FIGS. 1 and 2 is used for cooling and heating rooms in buildings or the like by performing vapor compression refrigeration cycle operation.

The refrigeration cycle apparatus 1 has a first circuit (primary side circuit) 5a, a second circuit (secondary side circuit) 10, and a cascade heat exchanger 35. The refrigeration cycle apparatus 1 according to the present embodiment has a binary refrigerant circuit including the vapor compression first circuit 5a and the vapor compression second circuit 10, and performs a binary refrigeration cycle.

The first circuit 5a circulates a first refrigerant and first refrigerating machine oil. The first refrigerant includes, for example, at least one of an HFC type refrigerant or an HFO type refrigerant. The first refrigerant in the present embodiment is R32. The first refrigerating machine oil is, for example, polyvinyl ether oil.

The second circuit 10 circulates a carbon dioxide refrigerant and second refrigerating machine oil. The second refrigerating machine oil is incompatible with carbon dioxide, for example. The second refrigerating machine oil in the present embodiment is polyalkylene glycol oil.

The first circuit 5a and the second circuit 10 are thermally connected via the cascade heat exchanger 35.

The refrigeration cycle apparatus 1 is configured by a first unit 5, a cascade unit 2, and second units 4a, 4b, and 4c being connected to each other via pipes. The first unit 5 is connected to the cascade unit 2 by a first communication pipe 112 and a second communication pipe 111. The cascade unit 2 is connected to a plurality of branch units 6a, 6b, and 6c by three communication pipes, namely, a third communication pipe 7, a fourth communication pipe 8, and a fifth communication pipe 9. The plurality of branch units 6a, 6b, and 6c are connected to a plurality of utilization units 3a, 3b, and 3c by first connecting pipes 15a, 15b, and 15c and second connecting pipes 16a, 16b, and 16c.

In the present embodiment, there is one first unit 5. In the present embodiment, there is one cascade unit 2. In the present embodiment, there are three second units 4a, 4b, and 4c. Specifically, the second units 4a, 4b, 4c include the branch units 6a, 6b, and 6c and the utilization units 3a, 3b, and 3c. The plurality of utilization units 3a, 3b, and 3c of the second units 4a, 4b, and 4c are three, namely, the first utilization unit 3a, the second utilization unit 3b, and the third utilization unit 3c. The plurality of branch units 6a, 6b, and 6c of the second units 4a, 4b, and 4c are three, namely, the first branch unit 6a, the second branch unit 6b, and the third branch unit 6c.

Furthermore, the refrigeration cycle apparatus 1 is configured so that each of the utilization units 3a, 3b, and 3c can individually perform cooling operation or heating operation, and heat recovery can be performed between the utilization units by sending the refrigerant from the utilization unit that performs heating operation to the utilization unit that performs cooling operation. Specifically, in the present embodiment, the heat recovery is performed through cooling-main operation and heating-main operation, in which the cooling operation and the heating operation are simultaneously performed. In addition, the refrigeration cycle apparatus 1 is configured to balance the heat load of the cascade unit 2 in accordance with the overall heat load of the plurality of utilization units 3a, 3b, and 3c, also taking into account the above-mentioned heat recovery (cooling-main operation and heating-main operation).

### (2) First circuit

The first circuit 5a has a first compressor 71, a first switching mechanism 72, a first heat exchanger 74, a first expansion valve 76, a first subcooling heat exchanger 103, a first subcooling circuit 104, a first subcooling expansion valve 104a, a second shutoff valve 108, a second expansion valve 102, the cascade heat exchanger 35 shared with the second circuit 10, a first shutoff valve 109, and a first accumulator 105. The first circuit 5a also has a first flow path 35b of the cascade heat exchanger 35.

The first compressor 71 is configured to compress the first refrigerant, and is, for example, a positive-displacement compressor, such as a scroll type, the operating capacity of which can be varied by inverter control of a compressor motor 71a.

The first accumulator 105 is provided at a point on a suction flow path that interconnects the first switching mechanism 72 and the suction side of the first compressor 71.

When causing the cascade heat exchanger 35 to function as an evaporator for the first refrigerant, the first switching mechanism 72 is brought into a fourth connection state in which the suction side of the first compressor 71 is connected to the gas side of the first flow path 35b of the cascade heat exchanger 35 (see the solid lines in the first switching mechanism 72 in FIG. 1). In addition, when causing the cascade heat exchanger 35 to function as a radiator for the first refrigerant, the first switching mechanism 72 is brought into a fifth connection state in which the discharge side of the first compressor 71 is connected to the gas side of the first flow path 35b of the cascade heat exchanger 35 (see the broken lines in the first switching mechanism 72 in FIG. 1). In this manner, the first switching mechanism 72 is capable of switching the flow path of the refrigerant in the first circuit 5a, and is, for example, a four-way switching valve. Furthermore, by changing the switching state of the first switching mechanism 72, it is possible to cause the cascade heat exchanger 35 to function as an evaporator or radiator for the first refrigerant.

The cascade heat exchanger 35 is configured to perform heat exchange between the refrigerant, such as R32, which is the first refrigerant, and the carbon dioxide refrigerant without mixing the refrigerants with each other. The cascade heat exchanger 35 is, for example, a plate heat exchanger. The cascade heat exchanger 35 has a second flow path 35a belonging to the second circuit 10, and the first flow path 35b belonging to the first circuit 5a. The second flow path 35a has a gas side connected to a second switching mechanism 22 via a third heat source pipe 25, and a liquid side connected to a heat source-side expansion valve 36 via a fourth heat source pipe 26. The first flow path 35b has a gas side connected to the first compressor 71 via a first refrigerant pipe 113, the first communication pipe 112, the first shutoff valve 109, and the first switching mechanism 72, and a liquid side connected to a second refrigerant pipe 114 in which the second expansion valve 102 is provided.

The first heat exchanger 74 is configured to perform heat exchange between the first refrigerant and outdoor air. In the first heat exchanger 74, the first refrigerant acquires cold or heat from outdoor air serving as a heat source. The gas side of the first heat exchanger 74 is connected to a pipe extending from the first switching mechanism 72. The first heat exchanger 74 is, for example, a fin-and-tube heat exchanger composed of a number of heat transfer tubes and fins.

The first expansion valve 76 is provided in a pipe extending from the liquid side of the first heat exchanger 74 to the first subcooling heat exchanger 103. The first expansion valve 76 is an electrically powered expansion valve having an adjustable opening degree, for example, for adjusting the flow rate of the first refrigerant flowing through the liquid-side portion of the first circuit 5a.

The first subcooling circuit 104 branches from between the first expansion valve 76 and the first subcooling heat exchanger 103, and is connected to the portion of the suction flow path between the first switching mechanism 72 and the first accumulator 105. The first subcooling expansion valve 104a is an electrically powered expansion valve having an adjustable opening degree, which is provided upstream of the first subcooling heat exchanger 103 in the first subcooling circuit 104 and adjusts the flow rate of the first refrigerant, or the like.

The first subcooling heat exchanger 103 performs heat exchange between the refrigerant flowing from the first expansion valve 76 toward the second shutoff valve 108, and the refrigerant decompressed by the first subcooling expansion valve 104a in the first subcooling circuit 104.

The first communication pipe 112 connects the first unit 5 to the cascade unit 2. The second communication pipe 111 connects the first unit 5 to the cascade unit 2.

The second expansion valve 102 is provided in the second refrigerant pipe 114. The second expansion valve 102 is an electrically powered expansion valve having an adjustable opening degree, for example, for adjusting the flow rate of the first refrigerant flowing through the first flow path 35b of the cascade heat exchanger 35.

The first shutoff valve 109 is provided between the first communication pipe 112 and the first switching mechanism 72. The second shutoff valve 108 is provided between the second communication pipe 111 and the first subcooling heat exchanger 103.

### (3) Second circuit

### (3-1) Outline of second circuit

The second circuit 10 is configured by the plurality of utilization units 3a, 3b, and 3c, the plurality of branch units 6a, 6b, and 6c, and the cascade unit 2 being connected to each other. Each of the utilization units 3a, 3b, and 3c is connected to the corresponding one of the branch units 6a, 6b, and 6c on one-on-one basis. Specifically, the utilization unit 3a and the branch unit 6a are connected via the first connecting pipe 15a and the second connecting pipe 16a, the utilization unit 3b and the branch unit 6b are connected via the first connecting pipe 15b and the second connecting pipe 16b, and the utilization unit 3c and the branch unit 6c are connected via the first connecting pipe 15c and the second connecting pipe 16c. In addition, the branch units 6a, 6b, and 6c are connected to the cascade unit 2 via three communication pipes, namely, the third communication pipe 7, the fourth communication pipe 8, and the fifth communication pipe 9. Specifically, the third communication pipe 7, the fourth communication pipe 8, and the fifth communication pipe 9 extending from the cascade unit 2 are each branched into a plurality of pipes and are connected to the branch units 6a, 6b, and 6c, respectively.

Either the refrigerant in a gas-liquid two-phase state or the refrigerant in a liquid state flows through the third communication pipe 7, depending on the operating state. Either the refrigerant in a gaseous state or the refrigerant in a supercritical state flows through the fourth communication pipe 8, depending on the operating state. Either the refrigerant in a gas-liquid two-phase state or the refrigerant in a gaseous state flows through the fifth communication pipe 9, depending on the operating state.

The second circuit 10 is configured by a heat source circuit 12, branch circuits 14a, 14b, and 14c, and utilization circuits 13a, 13b, and 13c being connected to each other.

### (3-2) Heat source circuit

The heat source circuit 12 mainly has a second compressor 21, the second switching mechanism 22, a first heat source pipe 28, a second heat source pipe 29, a suction flow path 23, a discharge flow path 24, the third heat source pipe 25, the fourth heat source pipe 26, a fifth heat source pipe 27, the cascade heat exchanger 35, the heat source-side expansion valve 36, a third shutoff valve 32, a fourth shutoff valve 33, a fifth shutoff valve 31, a second accumulator 30, an oil separator 34, an oil return circuit 40, a second receiver 45, a bypass circuit 46, a bypass expansion valve 46a, a second subcooling heat exchanger 47, a second subcooling circuit 48, a second subcooling expansion valve 48a, an oil return passage 23b, and an oil return valve 23c. In addition, the heat source circuit 12 of the second circuit 10 has the second flow path 35a of the cascade heat exchanger 35.

The second compressor 21 is configured to compress the carbon dioxide refrigerant in the heat source circuit 12 of the second circuit, and is, for example, a positive-displacement compressor, such as a scroll type, the operating capacity of which can be varied by inverter control of a compressor motor 21a. Note that the second compressor 21 is controlled such that the greater the load, the greater the operating capacity, depending on the load during operation.

The second switching mechanism 22 is capable of switching the connection state of the second circuit 10, particularly, the flow path of the refrigerant in the heat source circuit 12. In the present embodiment, the second switching mechanism 22 has a discharge-side communication portion 22x, a suction-side communication portion 22y, a first switching valve 22a, and a second switching valve 22b. The discharge-side communication portion 22x is connected to the end of the discharge flow path 24 on the opposite side from the second compressor 21 side. The suction-side communication portion 22y is connected to the end of the suction flow path 23 on the opposite side from the second compressor 21 side. The first switching valve 22a and the second switching valve 22b are provided in parallel to each other between the discharge flow path 24 and the suction flow path 23 of the second compressor 21. The first switching valve 22a is connected to one end of the discharge-side communication portion 22x and one end of the suction-side communication portion 22y. The second switching valve 22b is connected to the other end of the discharge-side communication portion 22x and the other end of the suction-side communication portion 22y. In the present embodiment, the first switching valve 22a and the second switching valve 22b are both configured as four-way switching valves. Each of the first switching valve 22a and the second switching valve 22b has four connection ports, namely, a first connection port, a second connection port, a third connection port, and a fourth connection port. In the first switching valve 22a and the second switching valve 22b according to the present embodiment, each of the fourth port is closed and is not connected to the flow path of the second circuit 10. In the first switching valve 22a, the first connection port is connected to the one end of the discharge-side communication portion 22x, the second connection port is connected to the third heat source pipe 25 extending from the second flow path 35a of the cascade heat exchanger 35, and the third connection port is connected to the one end of the suction-side communication portion 22y. The first switching valve 22a switches between a switching state in which the first connection port is connected to the second connection port and the third connection port is connected to the fourth connection port, and a switching state in which the third connection port is connected to the second connection port and the first connection port is connected to the fourth connection port. In the second switching valve 22b, the first connection port is connected to the other end of the discharge-side communication portion 22x, the second connection port is connected to the first heat source pipe 28, and the third connection port is connected to the other end of the suction-side communication portion 22y. The second switching valve 22b switches between a switching state in which the first connection port is connected to the second connection port and the third connection port is connected to the fourth connection port, and a switching state in which the third connection port is connected to the second connection port and the first connection port is connected to the fourth connection port.

When suppressing the carbon dioxide refrigerant discharged from the second compressor 21 from being sent to the fourth communication pipe 8 while causing the cascade heat exchanger 35 to function as a radiator for the carbon dioxide refrigerant, the second switching mechanism 22 is switched to a first connection state in which the discharge flow path 24 is connected to the third heat source pipe 25 by the first switching valve 22a and the first heat source pipe 28 is connected to the suction flow path 23 by the second switching valve 22b. The first connection state of the second switching mechanism 22 is adopted during full cooling operation described later. In addition, when causing the cascade heat exchanger 35 to function as an evaporator for the carbon dioxide refrigerant, the second switching mechanism 22 is switched to a second connection state in which the discharge flow path 24 is connected to the first heat source pipe 28 by the second switching valve 22b and the third heat source pipe 25 is connected to the suction flow path 23 by the first switching valve 22a. The second connection state of the second switching mechanism 22 is adopted during full heating operation and heating-main operation described later. In addition, when sending the carbon dioxide refrigerant discharged from the second compressor 21 to the fourth communication pipe 8 while causing the cascade heat exchanger 35 to function as a radiator for the carbon dioxide refrigerant, the second switching mechanism 22 is switched to a third connection state in which the discharge flow path 24 is connected to the third heat source pipe 25 by the first switching valve 22a and the discharge flow path 24 is connected to the first heat source pipe 28 by the second switching valve 22b. The third connection state of the second switching mechanism 22 is adopted during cooling-main operation described later.

As described above, the cascade heat exchanger 35 is configured to perform heat exchange between the refrigerant, such as R32, which is the first refrigerant flowing through the first circuit 5a, and the carbon dioxide refrigerant flowing through the second circuit 10 without mixing the refrigerants with each other. Note that the cascade heat exchanger 35 has the second flow path 35a through which the carbon dioxide refrigerant in the second circuit 10 flows and the first flow path 35b through which the first refrigerant in the first circuit 5a flows, and is thus shared by the first unit 5 and the cascade unit 2. Note that, in the present embodiment, the cascade heat exchanger 35 is disposed inside the cascade casing of the cascade unit 2. The gas side of the first flow path 35b of the cascade heat exchanger 35 extends through the first refrigerant pipe 113 to the first communication pipe 112 outside the cascade casing. The liquid side of the first flow path 35b of the cascade heat exchanger 35 extends through the second refrigerant pipe 114, in which the second expansion valve 102 is provided, to the second communication pipe 111 outside the cascade casing.

The heat source-side expansion valve 36 is an electrically powered expansion valve having an adjustable opening degree, which is connected to the liquid side of the cascade heat exchanger 35 so as to adjust the flow rate of the carbon dioxide refrigerant flowing through the cascade heat exchanger 35, for example. The heat source-side expansion valve 36 is provided in the fourth heat source pipe 26.

The third shutoff valve 32, the fourth shutoff valve 33, and the fifth shutoff valve 31 are provided at connecting ports to external devices and pipes (specifically, the communication pipes 7, 8, and 9). Specifically, the third shutoff valve 32 is connected to the fourth communication pipe 8 drawn from the cascade unit 2. The fourth shutoff valve 33 is connected to the fifth communication pipe 9 drawn from the cascade unit 2. The fifth shutoff valve 31 is connected to the third communication pipe 7 drawn from the cascade unit 2.

The first heat source pipe 28 is a refrigerant pipe that connects the third shutoff valve 32 and the second switching mechanism 22. Specifically, the first heat source pipe 28 connects the third shutoff valve 32 to the second connection port of the second switching valve 22b of the second switching mechanism 22.

The suction flow path 23 provides communication between the second switching mechanism 22 and the suction side of the second compressor 21. Specifically, the suction flow path 23 connects the suction-side communication portion 22y of the second switching mechanism 22 to the suction side of the second compressor 21. The second accumulator 30 is provided at a point on the suction flow path 23.

The suction flow path 23 includes a suction pipe 23a. The suction pipe 23a connects the suction side of second compressor 21 to the second accumulator 30. Here, one end of the suction pipe 23a is connected to the suction side of the second compressor 21, and the other end of the suction pipe 23a is connected to the upper portion of the second accumulator 30.

The second heat source pipe 29 is a refrigerant pipe that connects the fourth shutoff valve 33 to a point on the suction flow path 23. Note that, in the present embodiment, the second heat source pipe 29 is connected to the suction flow path 23 at a connection point, which is the portion of the suction flow path 23 between the suction-side communication portion 22y of the second switching mechanism 22 and the second accumulator 30.

The discharge flow path 24 is a refrigerant pipe that connects the discharge side of the second compressor 21 to the second switching mechanism 22. Specifically, the discharge flow path 24 connects the discharge side of the second compressor 21 to the discharge-side communication portion 22x of the second switching mechanism 22.

The third heat source pipe 25 is a refrigerant pipe that connects the second switching mechanism 22 to the gas side of the cascade heat exchanger 35. Specifically, the third heat source pipe 25 connects the second connection port of the first switching valve 22a of the second switching mechanism 22 to the gas-side end of the second flow path 35a in the cascade heat exchanger 35.

The fourth heat source pipe 26 is a refrigerant pipe that connects the liquid side (opposite side from the gas side, that is, the opposite side from the side on which the second switching mechanism 22 is provided) of the cascade heat exchanger 35 to the second receiver 45. Specifically, the fourth heat source pipe 26 connects the liquid-side end (the end on the opposite side from the gas side) of the second flow path 35a in the cascade heat exchanger 35 to the second receiver 45.

The second receiver 45 stores the carbon dioxide refrigerant. The second receiver 45 is provided between the liquid side of the cascade heat exchanger 35 and the second heat exchangers 52a, 52b, and 52c. The fourth heat source pipe 26, the fifth heat source pipe 27, and the bypass circuit 46 extend from the second receiver 45.

The bypass circuit 46 connects a point between the second heat exchangers 52a, 52b, and 52c and the cascade heat exchanger 35, to the suction pipe 23a to be described later. Here, the bypass circuit 46 is a refrigerant pipe that connects a gas-phase region, which is the upper region inside the second receiver 45, to the suction flow path 23. Specifically, the bypass circuit 46 is connected to a point in the suction flow path 23 between the second switching mechanism 22 and the second accumulator 30.

The bypass circuit 46 is provided with the bypass expansion valve 46a. The bypass expansion valve 46a is an electrically powered expansion valve, the opening degree of which is adjustable, thereby adjusting the amount of the refrigerant to be led from inside the second receiver 45 to the suction side of the second compressor 21.

The fifth heat source pipe 27 is a refrigerant pipe that connects the second receiver 45 to the fifth shutoff valve 31.

The second subcooling circuit 48 is a refrigerant pipe that connects a portion of the fifth heat source pipe 27 to the suction flow path 23. Specifically, the second subcooling circuit 48 is connected to a point in the suction flow path 23 between the second switching mechanism 22 and the second accumulator 30. Note that in the present embodiment, the second subcooling circuit 48 extends so as to branch from between the second receiver 45 and the second subcooling heat exchanger 47.

The second subcooling heat exchanger 47 performs heat exchange between the refrigerant flowing through the flow path belonging to the fifth heat source pipe 27 and the refrigerant flowing through the flow path belonging to the second subcooling circuit 48. In the present embodiment, the second subcooling heat exchanger 47 is provided in the fifth heat source pipe 27 between the point where the second subcooling circuit 48 branches off and the fifth shutoff valve 31. The second subcooling expansion valve 48a is provided in the second subcooling circuit 48 between the branch point from the fifth heat source pipe 27 and the second subcooling heat exchanger 47. The second subcooling expansion valve 48a supplies the second subcooling heat exchanger 47 with decompressed refrigerant and is an electrically powered expansion valve having an adjustable opening degree.

The second accumulator 30 is provided on the suction side of the second compressor 21. The second accumulator 30 is a container that stores the carbon dioxide refrigerant and the second refrigerating machine oil. The second accumulator 30 is a gas-liquid separator that separates the inflowing fluid into a liquid phase and a gas phase. Extending from the second accumulator 30 are the suction pipe 23a, the oil return passage 23b to be described later, and the portion of the suction flow path 23 connected to the second switching mechanism 22.

The second accumulator 30 includes a body 30a, an inflow port 30b, a refrigerant outflow port 30c, and an oil outflow port 30d.

The body 30a has a sealable shape. The body 30a is not limited, but is, for example, cylindrical, U-shaped, or the like.

The inflow port 30b allows a mixture of the carbon dioxide refrigerant and the second refrigerating machine oil to flow into the body 30a. The inflow port 30b allows the carbon dioxide refrigerant to flow into the body 30a from the portion of the suction flow path 23 connected to the second switching mechanism 22. The inflow port 30b is provided at the top of the body 30a.

The refrigerant outflow port 30c discharges the carbon dioxide refrigerant stored in the body 30a. The refrigerant outflow port 30c is provided at the top of the body 30a. The refrigerant outflow port 30c returns the carbon dioxide refrigerant to the suction pipe 23a.

The oil outflow port 30d discharges the refrigerating machine oil stored in the body 30a. The oil outflow port 30d is provided at the lower portion of the body 30a. The oil outflow port 30d sends the second refrigerating machine oil to the oil return passage 23b.

The oil return passage 23b is provided so as to connect the lower portion of the second accumulator 30 to the suction pipe 23a. The oil return passage 23b returns the second refrigerating machine oil from the lower portion of the second accumulator 30 to the suction pipe 23a.

In the present embodiment, the above-described "lower portion of the second accumulator 30" is the bottom surface of the body 30a serving as a container. In other words, one end of the oil return passage 23b is connected to the bottom surface of the body 30a of the second accumulator 30. Note that the bottom surface of the body 30a includes a downward curved structure, upward curved structure, flat structure, and the like.

The oil return valve 23c is provided at a point on the oil return passage 23b. When the oil return valve 23c is controlled to be in an open state, the second refrigerating machine oil separated in the second accumulator 30 passes through the oil return passage 23b and then through the suction pipe 23a to be returned to the suction side of the second compressor 21.

As long as the oil return valve 23c has a mechanism for narrowing the oil return passage 23b, the oil return valve 23c may be an electromagnetic valve that is controlled to open and close, or may be an electric valve having an adjustable opening degree. In the present embodiment, the oil return valve 23c is an electromagnetic valve that opens or closes the oil return passage 23b.

The oil separator 34 is provided at a point on the discharge flow path 24. The oil separator 34 is configured to separate, from the carbon dioxide refrigerant, the second refrigerating machine oil discharged from the second compressor 21 along with the carbon dioxide refrigerant and return the second refrigerating machine oil to the second compressor 21.

The oil return circuit 40 is provided so as to connect the oil separator 34 to the suction flow path 23. The oil return circuit 40 has an oil return flow path 41 that extends from the oil separator 34 so as to join the portion of the suction flow path 23 between the second accumulator 30 and the suction side of the second compressor 21. An oil return on-off valve 44 is provided at a point on the oil return flow path 41. When the oil return on-off valve 44 is controlled to be in an open state, the second refrigerating machine oil separated in the oil separator 34 passes through the oil return flow path 41 and is returned to the suction side of the second compressor 21. Here, in the present embodiment, if the second compressor 21 is in operation state in the second circuit 10, the oil return on-off valve 44 repeatedly maintains the open state for a predetermined time and the closed state for a predetermined time, thereby controlling the amount of the second refrigerating machine oil to be returned through the oil return circuit 40. Note that in the present embodiment, the oil return on-off valve 44 is an electromagnetic valve that is controlled to open and close, but may be an electrically powered expansion valve having an adjustable opening degree.

**In** addition, the heat source circuit 12 constituting the second circuit 10 also has a sensor that measures at least one of the temperature and pressure of the carbon dioxide refrigerant and the second refrigerating machine oil on the suction side of the second compressor 21. Here, a second suction temperature sensor 88 is provided as a sensor that measures the temperature of the carbon dioxide refrigerant and the second refrigerating machine oil on the suction side of the second compressor 21, and a second suction pressure sensor 37 is provided as a sensor that measures the pressure of the carbon dioxide refrigerant and the second refrigerating machine oil on the suction side of the second compressor 21.

### (3-3) Utilization circuit

Hereinafter, the utilization circuits 13a, 13b, and 13c will be described. Since the utilization circuits 13b and 13c have a similar configuration to the utilization circuit 13a, the explanation of each part of the utilization circuits 13b and 13c is omitted, with the subscript "b" or "c" added in place of the subscript "a" in the reference sign indicating each part of the utilization circuit 13a.

The utilization circuit 13a mainly has the second heat exchanger 52a, a first utilization pipe 57a, a second utilization pipe 56a, and a utilization-side expansion valve 51a.

The second heat exchanger 52a is configured to perform heat exchange between the refrigerant and indoor air, and is, for example, a fin-and-tube type heat exchanger composed of a number of heat transfer tubes and fins. Note that the plurality of second heat exchangers 52a, 52b, and 52c are connected in parallel with each other with respect to the second switching mechanism 22, the suction flow path 23, and the cascade heat exchanger 35.

The second utilization pipe 56a has one end connected to the liquid side (opposite side from the gas side) of the second heat exchanger 52a in the first utilization unit 3a. The other end of the second utilization pipe 56a is connected to the second connecting pipe 16a. The utilization-side expansion valve 51a described above is provided at a point on the second utilization pipe 56a.

The utilization-side expansion valve 51a is an electrically powered expansion valve having an adjustable opening degree, for example, for adjusting the flow rate of the refrigerant flowing through the second heat exchanger 52a. The utilization-side expansion valve 51a is provided in the second utilization pipe 56a.

The first utilization pipe 57a has one end connected to the gas side of the second heat exchanger 52a in the first utilization unit 3a. In the present embodiment, the first utilization pipe 57a is connected to the opposite side of the second heat exchanger 52a from the utilization-side expansion valve 51a. The other end of the first utilization pipe 57a is connected to the first connecting pipe 15a.

### (3-4) Branch circuit

Hereinafter, the branch circuits 14a, 14b, and 14c will be described. Since the branch circuits 14b and 14c have a similar configuration to the branch circuit 14a, the explanation of each part of the branch circuits 14b and 14c is omitted, with the subscript "b" or "c" added in place of the subscript "a" in the reference sign indicating each part of the branch circuit 14a.

The branch circuit 14a mainly has a junction pipe 62a, a first branch pipe 63a, a second branch pipe 64a, a first adjustment valve 66a, a second adjustment valve 67a, a bypass pipe 69a, a check valve 68a, and a third branch pipe 61a.

The junction pipe 62a has one end connected to the first connecting pipe 15a. The other end of the junction pipe 62a is connected to the first branch pipe 63a and the second branch pipe 64a, which are branched therefrom.

The opposite side of the first branch pipe 63a from the junction pipe 62a side is connected to the fourth communication pipe 8. The first branch pipe 63a is provided with the openable and closable first adjustment valve 66a.

The opposite side of the second branch pipe 64a from the junction pipe 62a side is connected to the fifth communication pipe 9. The second branch pipe 64a is provided with the openable and closable second adjustment valve 67a.

The bypass pipe 69a is a refrigerant pipe that connects the portion of the first branch pipe 63a closer to the fourth communication pipe 8 than the first adjustment valve 66a to the portion of the second branch pipe 64a closer to the fifth communication pipe 9 than the second adjustment valve 67a. The check valve 68a is provided at a point on the bypass pipe 69a. The check valve 68a allows only a refrigerant flow from the second branch pipe 64a toward the first branch pipe 63a, and does not allow a refrigerant flow from the first branch pipe 63a toward the second branch pipe 64a.

The third branch pipe 61a has one end connected to the second connecting pipe 16a. The other end of the third branch pipe 61a is connected to the third communication pipe 7.

Furthermore, when performing full cooling operation to be described later, the first branch unit 6a can function as follows by closing the first adjustment valve 66a and opening the second adjustment valve 67a. The first branch unit 6a sends the refrigerant flowing into the third branch pipe 61a through the third communication pipe 7 to the second connecting pipe 16a. Note that the refrigerant flowing through the second utilization pipe 56a of the first utilization unit 3a through the second connecting pipe 16a is sent to the second heat exchanger 52a of the first utilization unit 3a through the utilization-side expansion valve 51a. Then the refrigerant sent to the second heat exchanger 52a evaporates through heat exchange with indoor air and then flows through the first connecting pipe 15a via the first utilization pipe 57a. The refrigerant having flowed through the first connecting pipe 15a is sent to the junction pipe 62a of the first branch unit 6a. The refrigerant having flowed through the junction pipe 62a does not flow toward the first branch pipe 63a but flows toward the second branch pipe 64a. The refrigerant flowing through the second branch pipe 64a passes through the second adjustment valve 67a. Some of the refrigerant that has passed through the second adjustment valve 67a is sent to the fifth communication pipe 9. In addition, the rest of the refrigerant that has passed through the second adjustment valve 67a flows to branch into the bypass pipe 69a, in which the check valve 68a is provided, and after passing through part of the first branch pipe 63a, is sent to the fourth communication pipe 8. Thus, it is possible to increase the total flow path cross-sectional area when sending the carbon dioxide refrigerant in a gaseous state evaporated in the second heat exchanger 52a to the second compressor 21, so that pressure loss can be reduced.

In addition, when cooling a room with the first utilization unit 3a during cooling-main operation and heating-main operation to be described later, the first branch unit 6a can function as follows by closing the first adjustment valve 66a and opening the second adjustment valve 67a. The first branch unit 6a sends the refrigerant flowing into the third branch pipe 61a through the third communication pipe 7 to the second connecting pipe 16a. Note that the refrigerant flowing through the second utilization pipe 56a of the first utilization unit 3a through the second connecting pipe 16a is sent to the second heat exchanger 52a of the first utilization unit 3a through the utilization-side expansion valve 51a. Then the refrigerant sent to the second heat exchanger 52a evaporates through heat exchange with indoor air and then flows through the first connecting pipe 15a via the first utilization pipe 57a. The refrigerant having flowed through the first connecting pipe 15a is sent to the junction pipe 62a of the first branch unit 6a. The refrigerant having flowed through the junction pipe 62a flows into the second branch pipe 64a, passes through the second adjustment valve 67a, and is then sent to the fifth communication pipe 9.

In addition, when performing full heating operation to be described later, the first branch unit 6a can function as follows by closing the second adjustment valve 67a and opening the first adjustment valve 66a. In the first branch unit 6a, the refrigerant flowing into the first branch pipe 63a through the fourth communication pipe 8 passes through the first adjustment valve 66a and is sent to the junction pipe 62a. The refrigerant having flowed through the junction pipe 62a flows through the first utilization pipe 57a of the utilization unit 3a via the first connecting pipe 15a to be sent to the second heat exchanger 52a. Then the refrigerant sent to the second heat exchanger 52a radiates heat through heat exchange with indoor air, and then passes through the utilization-side expansion valve 51a provided in the second utilization pipe 56a. The refrigerant having passed through the second utilization pipe 56a flows through the third branch pipe 61a of the first branch unit 6a via the second connecting pipe 16a and is then sent to the third communication pipe 7.

In addition, when heating a room with the first utilization unit 3a during cooling-main operation and heating-main operation to be described later, the first branch unit 6a can function as follows by closing the second adjustment valve 67a and opening the first adjustment valve 66a. In the first branch unit 6a, the refrigerant flowing into the first branch pipe 63a through the fourth communication pipe 8 passes through the first adjustment valve 66a and is sent to the junction pipe 62a. The refrigerant having flowed through the junction pipe 62a flows through the first utilization pipe 57a of the utilization unit 3a via the first connecting pipe 15a to be sent to the second heat exchanger 52a. Then the refrigerant sent to the second heat exchanger 52a radiates heat through heat exchange with indoor air, and then passes through the utilization-side expansion valve 51a provided in the second utilization pipe 56a. The refrigerant having passed through the second utilization pipe 56a flows through the third branch pipe 61a of the first branch unit 6a via the second connecting pipe 16a and is then sent to the third communication pipe 7.

This function is provided not only to the first branch unit 6a but also to the second branch unit 6b and the third branch unit 6c. Therefore, the first branch unit 6a, the second branch unit 6b, and the third branch unit 6c can individually switch the second heat exchangers 52a, 52b, and 52c to function as a refrigerant evaporator or a refrigerant radiator.

### (4) First unit

The first unit 5 is disposed in a space different from the space in which the second units 4a, 4b, and 4c (specifically, the utilization units 3a, 3b, and 3c and the branch units 6a, 6b, and 6c) are disposed. Here, the first unit 5 is disposed on the rooftop of a building.

The first unit 5 includes part of the first circuit 5a described above, a first fan 75, various sensors, and a first control unit 70, in a first casing (not illustrated).

The first unit 5 has, as part of the first circuit 5a, the first compressor 71, the first switching mechanism 72, the first heat exchanger 74, the first expansion valve 76, the first subcooling heat exchanger 103, the first subcooling circuit 104, the first subcooling expansion valve 104a, the second shutoff valve 108, the first shutoff valve 109, the first accumulator 105.

The first fan 75 is provided within the first unit 5, and generates an air flow by which outdoor air is led to the first heat exchanger 74, subjected to heat exchange with the first refrigerant flowing through the first heat exchanger 74, and then discharged to the outside. The first fan 75 is driven by a first fan motor 75a.

The first unit 5 is also provided with various sensors. Specifically, the first unit 5 is provided with an outside air temperature sensor 77, a first discharge pressure sensor 78, a first suction pressure sensor 79, a first suction temperature sensor 81, and a first heat exchange temperature sensor 82. The outside air temperature sensor 77 detects the temperature of outdoor air before the outdoor air passes through the first heat exchanger 74. The first discharge pressure sensor 78 detects the pressure of the first refrigerant discharged from the first compressor 71. The first suction pressure sensor 79 detects the pressure of the first refrigerant to be sucked into the first compressor 71. The first suction temperature sensor 81 detects the temperature of the first refrigerant to be sucked into the first compressor 71. The first heat exchange temperature sensor 82 detects the temperature of the refrigerant flowing through the first heat exchanger 74.

The first control unit 70 controls the behavior of the members 71 (71a), 72, 75 (75a), 76, and 104a provided in the first unit 5. Further, the first control unit 70 has a processor, such as a CPU and a microcomputer, and a memory, which are provided for controlling the first unit 5, and is capable of exchanging control signals and the like with a remote controller (not illustrated) and exchanging control signals and the like with the heat source-side control unit 20 of the cascade unit 2, branch unit control units 60a, 60b, and 60c, and utilization-side control units 50a, 50b, and 50c.

### (5) Cascade unit

The cascade unit 2 is disposed in a space different from the space in which the second units 4a, 4b, and 4c (specifically, the utilization units 3a, 3b, and 3c and the branch units 6a, 6b, and 6c) are disposed. Here, the cascade unit 2 is disposed on the rooftop of the building.

The cascade unit 2 is connected to the branch units 6a, 6b, and 6c via the communication pipes 7, 8, and 9, and constitutes part of the second circuit 10. In addition, the cascade unit 2 is connected to the first unit 5 via the communication pipes 111 and 112, and constitutes part of the first circuit 5a.

The cascade unit 2 includes the above-described heat source circuit 12, various sensors, heat source-side control unit 20, and the second expansion valve 102, first refrigerant pipe 113, and second refrigerant pipe 114 constituting part of the first circuit 5a, in the cascade casing (not illustrated).

The cascade unit 2 is provided with various sensors. Specifically, the cascade unit 2 is provided with the above-described second suction pressure sensor 37, a second discharge pressure sensor 38, a second discharge temperature sensor 39, the above-described second suction temperature sensor 88, a cascade temperature sensor 83, a receiver outlet temperature sensor 84, a bypass circuit temperature sensor 85, a subcooling outlet temperature sensor 86, and a subcooling circuit temperature sensor 87. The second suction pressure sensor 37 detects the pressure of the carbon dioxide refrigerant on the suction side of the second compressor 21. The second discharge pressure sensor 38 detects the pressure of the carbon dioxide refrigerant on the discharge side of the second compressor 21. The second discharge temperature sensor 39 detects the temperature of the carbon dioxide refrigerant on the discharge side of the second compressor 21. The second suction temperature sensor 88 detects the temperature of the carbon dioxide refrigerant on the suction side of the second compressor 21. The cascade temperature sensor 83 detects the temperature of the carbon dioxide refrigerant flowing between the second flow path 35a of the cascade heat exchanger 35 and the heat source-side expansion valve 36. The receiver outlet temperature sensor 84 detects the temperature of the carbon dioxide refrigerant flowing between the second receiver 45 and the second subcooling heat exchanger 47. The bypass circuit temperature sensor 85 detects the temperature of the carbon dioxide refrigerant flowing downstream of the bypass expansion valve 46a in the bypass circuit 46. The subcooling outlet temperature sensor 86 detects the temperature of the carbon dioxide refrigerant flowing between the second subcooling heat exchanger 47 and the fifth shutoff valve 31. The subcooling circuit temperature sensor 87 detects the temperature of the carbon dioxide refrigerant flowing through the outlet of the second subcooling heat exchanger 47 in the second subcooling circuit 48.

The heat source-side control unit 20 controls the behavior of the members 21 (21a), 22, 23c, 36, 44, 46a, 48a, 102 provided inside the cascade casing (not illustrated) of the cascade unit 2. The heat source-side control unit 20 has a processor, such as a CPU or a microcomputer, and a memory, which are provided for controlling the cascade unit 2, and is capable of exchanging control signals and the like with the first control unit 70 of the first unit 5, and the utilization-side control units 50a, 50b, and 50c and branch unit control units 60a, 60b, and 60c of the utilization units 3a, 3b, and 3c.

Note that, as described above, the heat source-side control unit 20 can control not only the members constituting the heat source circuit 12 of the second circuit 10, but also the second expansion valve 102 constituting part of the first circuit 5a. Therefore, the heat source-side control unit 20 can bring the situation of the heat source circuit 12 closer to a desired situation by controlling the valve opening degree of the second expansion valve 102 by itself on the basis of the situation of the heat source circuit 12 controlled by the heat source-side control unit 20 itself. Specifically, it is possible to control the amount of heat that the carbon dioxide refrigerant flowing through the second flow path 35a of the cascade heat exchanger 35 in the heat source circuit 12 receives from or gives to the first refrigerant flowing through the first flow path 35b of the cascade heat exchanger 35.

### (6) Second unit

The second units 4a, 4b, and 4c include the utilization units 3a, 3b, and 3c, the branch units 6a, 6b, and 6c, the first connecting pipes 15a, 15b, and 15c, and the second connecting pipes 16a, 16b, and 16c.

### (6-1) Utilization unit

The utilization units 3a, 3b, and 3c are installed by being embedded in or suspended from the ceiling of a room in a building or the like, or by being hung on the wall surface of the room, or the like.

The utilization units 3a, 3b, and 3c are connected to the cascade unit 2 via the communication pipes 7, 8, and 9.

The utilization units 3a, 3b, and 3c have the utilization circuits 13a, 13b, and 13c, respectively, which constitute part of the second circuit 10.

Hereinafter, configurations of the utilization units 3a, 3b, and 3c are described. Note that since the second utilization unit 3b and the third utilization unit 3c have a similar configuration to the first utilization unit 3a, only the configuration of the first utilization unit 3a will be described here. For the configurations of the second utilization unit 3b and the third utilization unit 3c, the subscript "b" or "c" will be added in place of the subscript "a" in the reference sign indicating each part of the first utilization unit 3a, and the description of each part is omitted.

The first utilization unit 3a mainly has the utilization circuit 13a described above, a second fan 53a, the utilization-side control unit 50a, and various sensors. Note that the second fan 53a has a second fan motor 54a.

The second fan 53a generates an air flow by which indoor air is sucked into the utilization unit 3a, subjected to heat exchange with the refrigerant flowing through the second heat exchanger 52a, and then supplied into the room as supply air. The second fan 53a is driven by the second fan motor 54a.

The utilization unit 3a is provided with a liquid-side temperature sensor 58a that detects the temperature of the refrigerant on the liquid side of the second heat exchanger 52a. The utilization unit 3a is also provided with an indoor temperature sensor 55a that detects the indoor temperature, which is the temperature of air taken in from the room and before passing through the second heat exchanger 52a.

The utilization-side control unit 50a controls the behavior of the members 51a and 53a (54a) constituting the utilization unit 3a. Further, the utilization-side control unit 50a has a processor, such as a CPU and a microcomputer, and a memory, which are provided for controlling the utilization unit 3a, and is capable of exchanging control signals and the like with a remote controller (not illustrated) and exchanging control signals and the like with the heat source-side control unit 20 of the cascade unit 2, the branch unit control units 60a, 60b, and 60c, and the first control unit 70 of the first unit 5.

Note that the second utilization unit 3b has the utilization circuit 13b, a second fan 53b, the utilization-side control unit 50b, and a second fan motor 54b. The third utilization unit 3c has the utilization circuit 13c, a second fan 53c, the utilization-side control unit 50c, and a second fan motor 54c.

### (6-2) Branch unit

The branch units 6a, 6b, and 6c are installed in a space or the like behind the ceiling of a room in a building or the like.

Each of the branch units 6a, 6b, and 6c is connected to the corresponding one of the utilization units 3a, 3b, and 3c on one-on-one basis. The branch units 6a, 6b, and 6c are connected to the cascade unit 2 via the communication pipes 7, 8, and 9.

Next, the configuration of the branch units 6a, 6b, and 6c will be described. Note that since the second branch unit 6b and the third branch unit 6c have a similar configuration to the first branch unit 6a, only the configuration of the first branch unit 6a will be described here. For the configurations of the second branch unit 6b and the third branch unit 6c, the subscript "b" or "c" will be added in place of the subscript "a" in the reference sign indicating each part of the first branch unit 6a, and the description of each part is omitted.

The first branch unit 6a mainly has the branch circuit 14a and the branch unit control unit 60a described above.

The branch unit control unit 60a controls the behavior of the members 66a and 67a constituting the branch unit 6a. Further, the branch unit control unit 60a has a processor, such as a CPU or a microcomputer, and a memory, which are provided for controlling the branch unit 6a, and is capable of exchanging control signals and the like with a remote controller (not illustrated) and exchanging control signals and the like with the heat source-side control unit 20 of the cascade unit 2, the utilization units 3a, 3b, and 3c, and the first control unit 70 of the first unit 5.

Note that the second branch unit 6b has the branch circuit 14b and the branch unit control unit 60b. The third branch unit 6c has the branch circuit 14c and the branch unit control unit 60c.

### (7) Control unit

### (7-1) Outline

In the refrigeration cycle apparatus 1, the above-described heat source-side control unit 20, the utilization-side control units 50a, 50b, and 50c, the branch unit control units 60a, 60b, and 60c, and the first control unit 70 are communicably connected to each other in a wired or wireless manner to constitute a control unit 80. Therefore, the control unit 80 controls the behavior of the members 21 (21a), 22, 23c, 36, 44, 46a, 48a, 51a, 51b, 51c, 53a, 53b, 53c (54a, 54b, 54c), 66a, 66b, 66c, 67a, 67b, 67c, 71 (71a), 72, 75 (75a), 76, 104a, and the like on the basis of detection information of the various sensors 37, 38, 39, 83, 84, 85, 86, 87, 88, 77, 78, 79, 81, 82, 58a, 58b, 58c, 56a, 56b, 56c, and the like, instruction information received from a remote controller (not illustrated), and the like.

Here, the control unit 80 switches between operation in which the carbon dioxide refrigerant is heated by the first refrigerant (in the present embodiment, full heating operation or heating-main operation) and operation in which the carbon dioxide refrigerant is cooled by the first refrigerant (in the present embodiment, full cooling operation or cooling-main operation) in the cascade heat exchanger 35. In this manner, the heat source-side control unit 20 of the control unit 80 controls the second switching mechanism 22 to switch between the heating and cooling of the carbon dioxide refrigerant by the cascade heat exchanger 35. Specifically, the control unit 80 controls the second switching mechanism 22 to switch between a first state in which the cascade heat exchanger 35 functions as a radiator for the carbon dioxide refrigerant and a second state in which the cascade heat exchanger 35 functions as an evaporator for the carbon dioxide refrigerant.

### (7-2) Startup control

Hereinafter, the startup control by the control unit 80 at the startup of the refrigeration cycle operation of the refrigeration cycle apparatus 1 will be described. Note that the normal refrigeration cycle operation of the refrigeration cycle apparatus 1 includes full cooling operation, full heating operation, cooling-main operation, and heating-main operation. In the present embodiment, the control unit 80 performs startup control during the operation in which the carbon dioxide refrigerant is heated by the first refrigerant in the cascade heat exchanger 35. Here, the control unit 80 performs startup control during the full heating operation and the heating-main operation.

After starting the circulation of the first refrigerant in the first circuit 5a, the control unit 80 performs startup control to open the oil return valve 23c. Specifically, upon receiving a command for the heating operation or heating-main operation from a remote controller or the like, the control unit 80 starts the first compressor 71 to circulate the first refrigerant in the first circuit 5a, and then performs control to increase the opening degree of the oil return valve 23c.

If the temperature of the carbon dioxide refrigerant in the second accumulator 30 located outside the room is low because of the low outside temperature at the startup of the full heating operation or the heating-main operation, the density of the second refrigerating machine oil may be lower than the density of the carbon dioxide refrigerant. In this case, an abnormal state occurs in which the second refrigerating machine oil is positioned above the carbon dioxide refrigerant in the second accumulator 30. In this abnormal state, the control unit 80 can prevent the carbon dioxide refrigerant from flowing out into the oil return passage 23b in which the oil return valve 23c is provided, by controlling the oil return valve 23c to close. Then, by performing the startup control to start the circulation of the first refrigerant in the first circuit 5a, the temperature of the carbon dioxide refrigerant in the second accumulator 30 of the second circuit 10 can be raised via the cascade heat exchanger 35. This allows for a normal state in which the density of the carbon dioxide refrigerant is lower than the density of the second refrigerating machine oil. In other words, the control unit 80 performs control such that the second refrigerating machine oil is located below the carbon dioxide refrigerant, in the second accumulator 30. In further other words, the control unit 80 prevents the second refrigerating machine oil from inverting from below to above the carbon dioxide refrigerant, in the second accumulator 30. Then, after the normal state is reached, the control unit 80 controls the oil return valve 23c to open, thereby causing the second refrigerating machine oil to flow out from the oil return valve 23c to the oil return passage 23b and preventing the carbon dioxide refrigerant from flowing out.

In the present embodiment, when starting the full heating operation or heating-main operation, the control unit 80 first causes the first refrigerant to circulate in the first circuit 5a, then causes the carbon dioxide refrigerant to circulate in the second circuit 10, and then opens the oil return valve 23c.

Specifically, after starting the circulation of the first refrigerant in the first circuit 5a, the control unit 80 starts the circulation of the carbon dioxide refrigerant in the second circuit 10. Here, the control unit 80 causes the first refrigerant to circulate in the first circuit 5a, and when the condensation temperature of the first refrigerant in the cascade heat exchanger 35 rises to a predetermined value or higher, starts the second compressor 21 to start the circulation of the carbon dioxide refrigerant in the second circuit 10.

Further, the control unit 80 opens the oil return valve 23c after starting the circulation of the carbon dioxide refrigerant in the second circuit 10. Here, the control unit 80 opens the oil return valve 23c when the temperature or pressure of the carbon dioxide refrigerant and the second refrigerating machine oil in the second accumulator 30 becomes equal to or higher than a predetermined temperature or predetermined pressure corresponding to a boundary temperature at which the density of the carbon dioxide refrigerant and the density of the second refrigerating machine oil in the second accumulator 30 become equal.

Note that the "predetermined temperature or predetermined pressure" is a temperature or pressure equal to or higher than the boundary temperature, and is preferably a temperature or pressure exceeding the boundary temperature. The boundary temperature is -15°C if the second refrigerating machine oil is polyalkylene glycol.

In order to determine whether or not the temperature or pressure of the carbon dioxide refrigerant and the second refrigerating machine oil in the second accumulator 30 is equal to or higher than the predetermined temperature or the predetermined pressure, in the present embodiment, the control unit 80 acquires the temperature or pressure of the carbon dioxide refrigerant and second refrigerating machine oil flowing through the suction pipe 23a, from a sensor that measures at least one of the temperature and pressure of the carbon dioxide refrigerant and the second refrigerating machine oil on the suction side of the second compressor 21. Here, the control unit 80 acquires, from at least one of the second suction temperature sensor 88 and the second suction pressure sensor 37, the temperature or pressure of the carbon dioxide refrigerant and second refrigerating machine oil flowing through the suction pipe 23a. Then the control unit 80 determines whether the acquired temperature or pressure is equal to or higher than the predetermined temperature or predetermined pressure corresponding to the boundary temperature at which the density of the carbon dioxide refrigerant and the density of the second refrigerating machine oil in the second accumulator 30 become equal.

In addition, in the present embodiment, the control unit 80 performs startup control when the outside air temperature is equal to or lower than the first temperature, and does not perform startup control when the outside air temperature exceeds the first temperature. The control unit 80 has a first temperature related to startup control. The first temperature is the temperature at which the density of the carbon dioxide refrigerant becomes higher than the density of the refrigerating machine oil due to the low temperature of the carbon dioxide refrigerant in the second accumulator 30. The first temperature is, for example, -20°C. The control unit 80 then acquires the outside air temperature from the outside air temperature sensor 77, and determines whether or not the acquired outside air temperature is equal to or lower than the first temperature. Then, upon determining that the outside air temperature is equal to or lower than the first temperature, the control unit 80 performs startup control, and upon determining that the outside air temperature exceeds the first temperature, the startup control is not performed.

Here, the control unit 80 simultaneously starts the operation of the first circuit 5a, the operation of the second circuit 10, and the opening of the oil return valve 23c when the outside air temperature exceeds the first temperature. Note that "simultaneously" means, for example, that the control unit 80 issues a command to start the first compressor 71, a command to start the second compressor 21, and a command to open the oil return valve 23c at the same timing. This includes a case where the circulation of the first refrigerant in the first circuit 5a, the circulation of the carbon dioxide refrigerant in the second circuit 10, and the opening of the oil return valve 23c are started at exactly the same time, and a case where one of them is started slightly earlier.

### (8) Behavior of refrigeration cycle apparatus

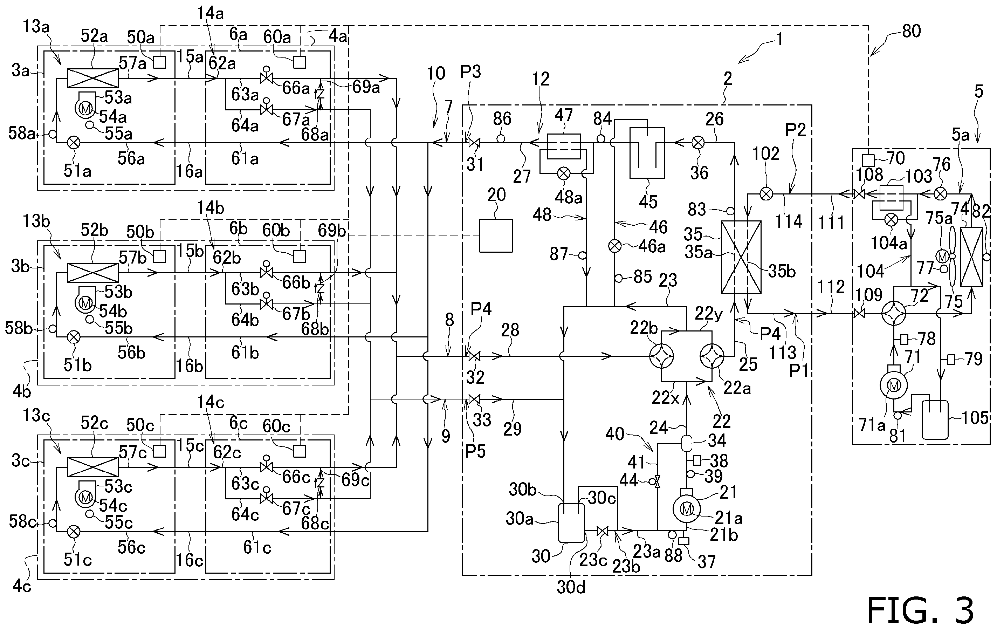

Next, the behavior of the refrigeration cycle apparatus 1 will be described with reference to FIGS. 3 to 6.

The refrigeration cycle operation of the refrigeration cycle apparatus 1 can be mainly divided into full cooling operation, full heating operation, cooling-main operation, and heating-main operation.

Here, the full cooling operation is refrigeration cycle operation in which there are only utilization units in which the second heat exchangers 52a, 52b, and 52c operate as evaporators for the carbon dioxide refrigerant, and the cascade heat exchanger 35 functions as a radiator for the carbon dioxide refrigerant for the evaporation load of the entire utilization units.

The full heating operation is refrigeration cycle operation in which there are only utilization units in which the second heat exchangers 52a, 52b, and 52c operate as radiators for the carbon dioxide refrigerant, and the cascade heat exchanger 35 functions as an evaporator for the carbon dioxide refrigerant for the heat dissipation load of the entire utilization units.

The cooling-main operation is operation in which utilization units in which the second heat exchangers 52a, 52b, and 52c operate as evaporators for the carbon dioxide refrigerant and utilization units in which the second heat exchangers 52a, 52b, and 52c operate as refrigerant radiators are mixed. The cooling-main operation is refrigeration cycle operation in which the cascade heat exchanger 35 functions as a radiator for the carbon dioxide refrigerant in order to process the evaporation load of the entire utilization units when the evaporation load is the main part of the heat load of the entire utilization units.

The heating-main operation is operation in which utilization units in which the second heat exchangers 52a, 52b, and 52c operate as refrigerant evaporators and utilization units in which the second heat exchangers 52a, 52b, and 52c operate as refrigerant radiators are mixed. The heating-main operation is refrigeration cycle operation in which the cascade heat exchanger 35 functions as an evaporator for the carbon dioxide refrigerant in order to process the heat dissipation load of the entire utilization units when the heat dissipation load is the main part of the heat load of the entire utilization units.

Note that the behavior of the refrigeration cycle apparatus 1, including these refrigeration cycle operations, is performed by the control unit 80 described above.

### (8-1) Full cooling operation

In the full cooling operation, for example, all of the second heat exchangers 52a, 52b, and 52c of the utilization units 3a, 3b, and 3c operate as refrigerant evaporators. In addition, in the full cooling operation, the cascade heat exchanger 35 operates as a radiator for the carbon dioxide refrigerant. In this full cooling operation, the first circuit 5a and the second circuit 10 of the refrigeration cycle apparatus 1 are configured as illustrated in FIG. 3. Note that arrows attached to the first circuit 5a and arrows attached to the second circuit 10 in FIG. 3 indicate the flow of the refrigerant during the full cooling operation.

Specifically, in the first unit 5, the cascade heat exchanger 35 is caused to function as an evaporator for the first refrigerant by switching the first switching mechanism 72 to the fourth connection state. Note that the fourth connection state of the first switching mechanism 72 is indicated by the solid lines in the first switching mechanism 72 in FIG. 3. As a result, in the first unit 5, the first refrigerant discharged from the first compressor 71 passes through the first switching mechanism 72, and radiates heat by exchanging heat with the outside air supplied from the first fan 75 in the first heat exchanger 74. The first refrigerant from which heat has been radiated in the first heat exchanger 74 passes through the first expansion valve 76 controlled to be fully open, and some of the refrigerant flows toward the second shutoff valve 108 through the first subcooling heat exchanger 103, and the other part of the refrigerant branches off and flows into the first subcooling circuit 104. The refrigerant flowing through the first subcooling circuit 104 is decompressed while passing through the first subcooling expansion valve 104a. The refrigerant flowing from the first expansion valve 76 toward the second shutoff valve 108 exchanges heat with the refrigerant decompressed by the first subcooling expansion valve 104a and flowing through the first subcooling circuit 104, in the first subcooling heat exchanger 103, and is cooled to a subcooled state. The first refrigerant in the subcooled state passes through the second communication pipe 111, and is decompressed when passing through the second expansion valve 102. Here, the valve opening degree of the second expansion valve 102 is controlled such that the degree of superheating of the first refrigerant to be sucked into the first compressor 71 satisfies a predetermined condition. The first refrigerant decompressed by the second expansion valve 102 evaporates through heat exchange with the carbon dioxide refrigerant flowing through the second flow path 35a while flowing through the first flow path 35b of the cascade heat exchanger 35, and flows toward the first communication pipe 112. The first refrigerant passes through the first communication pipe 112 and the first shutoff valve 109, and then reaches the first switching mechanism 72. The refrigerant having passed through the first switching mechanism 72 joins the refrigerant having flowed through the first subcooling circuit 104, and is then sucked into the first compressor 71 via the first accumulator 105.

Furthermore, in the cascade unit 2, the cascade heat exchanger 35 is caused to function as a radiator for the carbon dioxide refrigerant by switching the second switching mechanism 22 to the first connection state. Note that, in the first connection state of the second switching mechanism 22, the discharge flow path 24 and the third heat source pipe 25 are connected by the first switching valve 22a, and the first heat source pipe 28 and the suction flow path 23 are connected by the second switching valve 22b. Here, the opening degree of the heat source-side expansion valve 36 is adjusted. In the first to third utilization units 3a, 3b, and 3c, the second adjustment valves 67a, 67b, and 67c are controlled to be open. As a result, all of the second heat exchangers 52a, 52b, and 52c of the utilization units 3a, 3b, and 3c function as refrigerant evaporators. In addition, all of the second heat exchangers 52a, 52b, and 52c of the utilization units 3a, 3b, and 3c are connected to the suction side of the second compressor 21 of the cascade unit 2 via the first utilization pipes 57a, 57b, and 57c, the first connecting pipes 15a, 15b, and 15c, the junction pipes 62a, 62b, and 62c, the second branch pipes 64a, 64b, and 64c, the bypass pipes 69a, 69b, and 69c, part of the first branch pipes 63a, 63b, and 63c, the fourth communication pipe 8, and the fifth communication pipe 9. In addition, the opening degree of the second subcooling expansion valve 48a is controlled such that the degree of subcooling of the carbon dioxide refrigerant flowing through the outlet of the second subcooling heat exchanger 47 toward the third communication pipe 7 satisfies a predetermined condition. The bypass expansion valve 46a is controlled to be closed. In the utilization units 3a, 3b, and 3c, the opening degrees of the utilization-side expansion valves 51a, 51b, and 51c are adjusted.

In such second circuit 10, the high-pressure carbon dioxide refrigerant compressed and discharged by the second compressor 21 is sent to the second flow path 35a of the cascade heat exchanger 35 through the first switching valve 22a of the second switching mechanism 22. In the cascade heat exchanger 35, the high-pressure carbon dioxide refrigerant flowing through the second flow path 35a radiates heat, and the first refrigerant flowing through the first flow path 35b of the cascade heat exchanger 35 evaporates. The carbon dioxide refrigerant from which heat has been radiated in the cascade heat exchanger 35 passes through the heat source-side expansion valve 36, the opening degree of which is adjusted, and then flows into the second receiver 45. Some of the carbon dioxide refrigerant flowing out of the second receiver 45 branches and flows into the second subcooling circuit 48, is decompressed in the second subcooling expansion valve 48a, and then joins the suction flow path 23. In the second subcooling heat exchanger 47, the other part of the refrigerant having flowed out of the second receiver 45 is cooled by the refrigerant flowing through the second subcooling circuit 48, and is then sent to the third communication pipe 7 through the fifth shutoff valve 31.

The refrigerant sent to third communication pipe 7 is then branched into three and passes through the third branch pipes 61a, 61b, and 61c of the first to third branch units 6a, 6b, 6c. Thereafter, the refrigerant having flowed through the second connecting pipes 16a, 16b, and 16c is sent to the second utilization pipes 56a, 56b, and 56c of the first to third utilization units 3a, 3b, and 3c. The refrigerant sent to the second utilization pipes 56a, 56b, and 56c is sent to the utilization-side expansion valves 51a, 51b, and 51c of the utilization units 3a, 3b, and 3c.

Then the carbon dioxide refrigerant having passed through the utilization-side expansion valves 51a, 51b, and 51c, the opening degrees of which are adjusted, exchanges heat with the indoor air supplied by the second fans 53a, 53b, and 53c in the second heat exchangers 52a, 52b, and 52c. As a result, the carbon dioxide refrigerant flowing through the second heat exchangers 52a, 52b, and 52c is evaporated into a low-pressure gas refrigerant. The indoor air is cooled and supplied into the room. The indoor space is thus cooled. The low-pressure gas refrigerant evaporated in the second heat exchangers 52a, 52b, and 52c flows through the first utilization pipes 57a, 57b, and 57c, flows through the first connecting pipes 15a, 15b, and 15c, and then is sent to the junction pipes 62a, 62b, and 62c of the first to third branch units 6a, 6b, and 6c.

Then the low-pressure gas refrigerant sent to the junction pipes 62a, 62b, and 62c flows to the second branch pipes 64a, 64b, and 64c. Some of the carbon dioxide refrigerant that has passed through the second adjustment valves 67a, 67b, and 67c in the second branch pipes 64a, 64b, and 64c is sent to the fifth communication pipe 9. The remaining refrigerant that has passed through the second adjustment valves 67a, 67b, and 67c passes through the bypass pipes 69a, 69b, and 69c, flows through part of the first branch pipes 63a, 63b, and 63c, and then is sent to the fourth communication pipe 8.

The low-pressure gas refrigerant sent to fourth communication pipe 8 and fifth communication pipe 9 is then returned to the suction side of the second compressor 21 through the third shutoff valve 32, the fourth shutoff valve 33, the first heat source pipe 28, the second heat source pipe 29, the second switching valve 22b of the second switching mechanism 22, the suction flow path 23, the second accumulator 30, and the suction pipe 23a.

In addition, the second refrigerating machine oil circulating in the second circuit 10 is returned from the lower portion of the second accumulator 30 to the suction side of the second compressor 21 through the oil return passage 23b, the oil return valve 23c, and the suction pipe 23a.

In this manner, the behavior in full cooling operation is performed.

Note that during the full heating operation, the control unit 80 controls the opening degree of the oil return valve 23c on the basis of the degree of superheating (discharge superheat degree) of the carbon dioxide refrigerant discharged from the second compressor 21 so that no liquid refrigerant flows into the second compressor 21.

### (8-2) Full heating operation

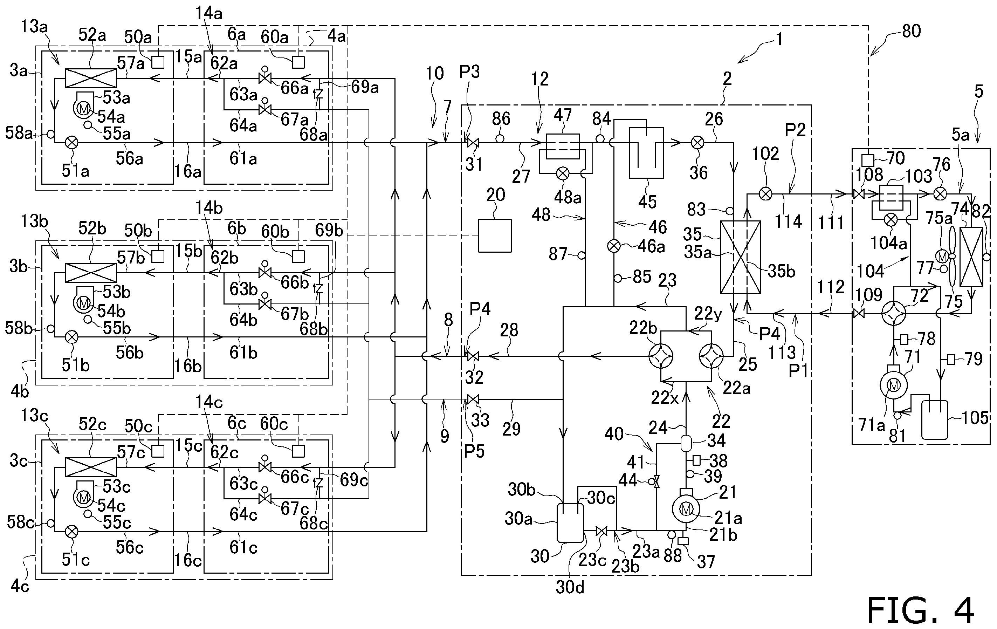

In the full heating operation, for example, all of the second heat exchangers 52a, 52b, and 52c of the utilization units 3a, 3b, and 3c operate as refrigerant radiators. In addition, in the full heating operation, the cascade heat exchanger 35 operates as an evaporator for the carbon dioxide refrigerant. In this full heating operation, the first circuit 5a and the second circuit 10 of the refrigeration cycle apparatus 1 are configured as illustrated in FIG. 4. Arrows attached to the first circuit 5a and arrows attached to the second circuit 10 in FIG. 4 indicate the flow of the refrigerant during the full heating operation.

Specifically, in the first unit 5, the cascade heat exchanger 35 is caused to function as a radiator for the first refrigerant by switching the first switching mechanism 72 to the fifth connection state. The fifth connection state of the first switching mechanism 72 is indicated by the broken lines in the first switching mechanism 72 in FIG. 4. Thus, in the first unit 5, the first refrigerant discharged from the first compressor 71 and passing through the first switching mechanism 72 further passes through the first communication pipe 112, and is sent to the first flow path 35b of the cascade heat exchanger 35. The refrigerant flowing through the first flow path 35b of the cascade heat exchanger 35 is condensed by heat exchange with the carbon dioxide refrigerant flowing through the second flow path 35a. When flowing through the second refrigerant pipe 114, the first refrigerant condensed in the cascade heat exchanger 35 passes through the second expansion valve 102 controlled to be fully open. The refrigerant that has passed through the second expansion valve 102 flows through the second communication pipe 111, the second shutoff valve 108, and the first subcooling heat exchanger 103 in this order, and is decompressed by the first expansion valve 76. Note that during the full heating operation, the first subcooling expansion valve 104a is controlled to be closed, so that no refrigerant flows in the first subcooling circuit 104, and therefore no heat exchange is performed in the first subcooling heat exchanger 103. Note that the valve opening degree of the first expansion valve 76 is controlled such that the degree of superheating of the first refrigerant sucked into the first compressor 71 satisfies a predetermined condition, for example. The refrigerant decompressed in the first expansion valve 76 evaporates through heat exchange with the outside air supplied from the first fan 75 in the first heat exchanger 74, passes through the first switching mechanism 72 and the first accumulator 105, and is sucked into the first compressor 71.

In addition, in the cascade unit 2, the second switching mechanism 22 is switched to the second connection state. The cascade heat exchanger 35 thus functions as an evaporator for the carbon dioxide refrigerant. In the second connection state of the second switching mechanism 22, the discharge flow path 24 and the first heat source pipe 28 are connected by the second switching valve 22b, and the third heat source pipe 25 and the suction flow path 23 are connected by the first switching valve 22a. In addition, the opening degree of the heat source-side expansion valve 36 is adjusted. In the first to third branch units 6a, 6b, and 6c, the first adjustment valves 66a, 66b, and 66c are controlled to be open, and the second adjustment valves 67a, 67b, and 67c are controlled to be closed. As a result, all of the second heat exchangers 52a, 52b, and 52c of the utilization units 3a, 3b, and 3c function as refrigerant radiators. In addition, the second heat exchangers 52a, 52b, and 52c of the utilization units 3a, 3b, and 3c are connected to the discharge side of the second compressor 21 of the cascade unit 2 via the discharge flow path 24, the first heat source pipe 28, the fourth communication pipe 8, the first branch pipes 63a, 63b, and 63c, the junction pipes 62a, 62b, and 62c, the first connecting pipes 15a, 15b, and 15c, and the first utilization pipes 57a, 57b, and 57c. In addition, the second subcooling expansion valve 48a and the bypass expansion valve 46a are controlled to be closed. In the utilization units 3a, 3b, and 3c, the opening degrees of the utilization-side expansion valves 51a, 51b, and 51c are adjusted.

In this second circuit 10, the high-pressure carbon dioxide refrigerant compressed and discharged by the second compressor 21 is sent to the first heat source pipe 28 through the second switching valve 22b of the second switching mechanism 22. The refrigerant sent to the first heat source pipe 28 is sent to the fourth communication pipe 8 through the third shutoff valve 32.

The high-pressure refrigerant sent to the fourth communication pipe 8 is then branched into three and sent to the first branch pipes 63a, 63b, and 63c of the utilization units 3a, 3b, and 3c, which are the utilization units in operation. The high-pressure carbon dioxide refrigerant sent to the first branch pipes 63a, 63b, and 63c passes through the first adjustment valves 66a, 66b, and 66c, and flows through the junction pipes 62a, 62b, and 62c. Thereafter, the refrigerant flowing through the first connecting pipes 15a, 15b, and 15c and the first utilization pipes 57a, 57b, and 57c is sent to the second heat exchangers 52a, 52b, and 52c.

Then, the high-pressure carbon dioxide refrigerant sent to the second heat exchangers 52a, 52b, and 52c exchanges heat with the indoor air supplied by the second fans 53a, 53b, and 53c in the second heat exchangers 52a, 52b, and 52c. As a result, the carbon dioxide refrigerant flowing through the second heat exchangers 52a, 52b, and 52c radiates heat. The indoor air is heated and supplied into the room. The indoor space is thus heated. The carbon dioxide refrigerant from which heat has been radiated in the second heat exchangers 52a, 52b, and 52c flows through the second utilization pipes 56a, 56b, and 56c and passes through the utilization-side expansion valves 51a, 51b, and 51c, the opening degrees of which are adjusted. Thereafter, the refrigerant flowing through the second connecting pipes 16a, 16b, and 16c flows through the third branch pipes 61a, 61b, and 61c of the branch units 6a, 6b, and 6c.

The carbon dioxide refrigerant sent to the third branch pipes 61a, 61b, and 61c is then sent to the third communication pipe 7 to join.

The carbon dioxide refrigerant sent to third communication pipe 7 is then sent to the heat source-side expansion valve 36 through the fifth shutoff valve 31. The refrigerant sent to the heat source-side expansion valve 36 is flow-adjusted by the heat source-side expansion valve 36 and then sent to the cascade heat exchanger 35. In the cascade heat exchanger 35, the carbon dioxide refrigerant flowing through the second flow path 35a is evaporated into a low-pressure gas refrigerant and sent to the second switching mechanism 22, and the first refrigerant flowing through the first flow path 35b of the cascade heat exchanger 35 condenses. Then, the low-pressure gas refrigerant sent to the first switching valve 22a of the second switching mechanism 22 is returned to the suction side of the second compressor 21 through the suction flow path 23, the second accumulator 30, and the suction pipe 23a.

In addition, the second refrigerating machine oil circulating in the second circuit 10 is returned from the lower portion of the second accumulator 30 to the suction side of the second compressor 21 through the oil return passage 23b, the oil return valve 23c, and the suction pipe 23a.

In this manner, the behavior in full heating operation is performed.

### (8-3) Cooling-main operation

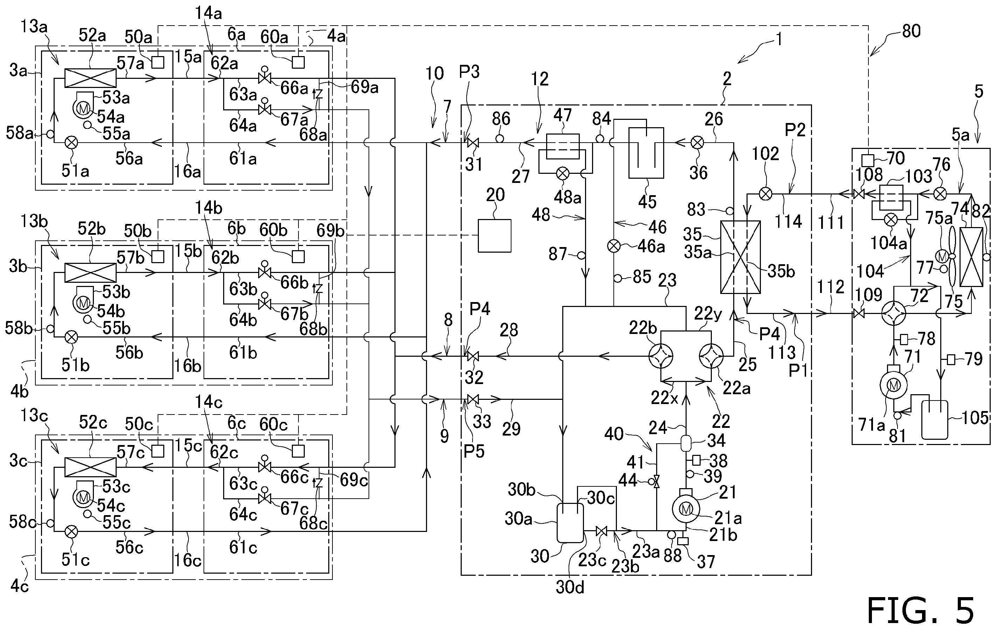

In the cooling-main operation, for example, the second heat exchangers 52a and 52b of the utilization units 3a and 3b operate as refrigerant evaporators, and the second heat exchanger 52c of the utilization unit 3c operates as a refrigerant radiator. In addition, in the cooling-main operation, the cascade heat exchanger 35 functions as a radiator for the carbon dioxide refrigerant. In this cooling-main operation, the first circuit 5a and the second circuit 10 of the refrigeration cycle apparatus 1 are configured as illustrated in FIG. 5. Arrows attached to the first circuit 5a and arrows attached to the second circuit 10 in FIG. 5 indicate the flow of the refrigerant during the cooling-main operation.

Specifically, in the first unit 5, the cascade heat exchanger 35 is caused to function as an evaporator for the first refrigerant by switching the first switching mechanism 72 to the fourth connection state (state indicated by the solid lines in the first switching mechanism 72 in FIG. 5). As a result, in the first unit 5, the first refrigerant discharged from the first compressor 71 passes through the first switching mechanism 72, and is condensed by exchanging heat with the outside air supplied from the first fan 75 in the first heat exchanger 74. The first refrigerant condensed in the first heat exchanger 74 passes through the first expansion valve 76 controlled to be fully open, some of the refrigerant flows toward the second shutoff valve 108 through the first subcooling heat exchanger 103, and the other part of the refrigerant branches and flows into the first subcooling circuit 104. The refrigerant flowing through the first subcooling circuit 104 is decompressed while passing through the first subcooling expansion valve 104a. The refrigerant flowing from the first expansion valve 76 toward the second shutoff valve 108 exchanges heat with the refrigerant decompressed by the first subcooling expansion valve 104a and flowing through the first subcooling circuit 104, in the first subcooling heat exchanger 103, and is cooled to a subcooled state. The refrigerant in the subcooled state flows through the second communication pipe 111 and is decompressed by the second expansion valve 102. Note that at this time, the valve opening degree of the second expansion valve 102 is controlled such that the degree of superheating of the refrigerant sucked into the first compressor 71 satisfies a predetermined condition, for example. The first refrigerant decompressed by the second expansion valve 102 evaporates through heat exchange with the carbon dioxide refrigerant flowing through the second flow path 35a while flowing through the first flow path 35b of the cascade heat exchanger 35, and flows toward the first communication pipe 112. The first refrigerant passes through the first communication pipe 112 and the first shutoff valve 109, and then reaches the first switching mechanism 72. The refrigerant having passed through the first switching mechanism 72 joins the refrigerant having flowed through the first subcooling circuit 104, and is then sucked into the first compressor 71 via the first accumulator 105.

In addition, in the cascade unit 2, the second switching mechanism 22 is switched to the third connection state in which the discharge flow path 24 and the third heat source pipe 25 are connected by the first switching valve 22a and the discharge flow path 24 and the first heat source pipe 28 are connected by the second switching valve 22b, thereby causing the cascade heat exchanger 35 to function as a radiator for the carbon dioxide refrigerant. In addition, the opening degree of the heat source-side expansion valve 36 is adjusted. In the first to third branch units 6a, 6b, and 6c, the first adjustment valve 66c and the second adjustment valves 67a and 67b are controlled to be open, and the first adjustment valves 66a and 66b and the second adjustment valve 67c are controlled to be closed. As a result, the second heat exchangers 52a and 52b of the utilization units 3a and 3b function as refrigerant evaporators, and the second heat exchanger 52c of the utilization unit 3c functions as a refrigerant radiator. In addition, the second heat exchangers 52a and 52b of the utilization units 3a and 3b are connected to the suction side of the second compressor 21 of the cascade unit 2 via the fifth communication pipe 9, and the second heat exchanger 52c of the utilization unit 3c is connected to the discharge side of the second compressor 21 of the cascade unit 2 via the fourth communication pipe 8. In addition, the opening degree of the second subcooling expansion valve 48a is controlled such that the degree of subcooling of the carbon dioxide refrigerant flowing through the outlet of the second subcooling heat exchanger 47 toward the third communication pipe 7 satisfies a predetermined condition. The bypass expansion valve 46a is controlled to be closed. In the utilization units 3a, 3b, and 3c, the opening degrees of the utilization-side expansion valves 51a, 51b, and 51c are adjusted.

In this second circuit 10, some of the high-pressure carbon dioxide refrigerant compressed and discharged by the second compressor 21 is sent to the fourth communication pipe 8 through the second switching valve 22b of the second switching mechanism 22, the first heat source pipe 28, and the third shutoff valve 32, and the remaining refrigerant is sent to the second flow path 35a of the cascade heat exchanger 35 through the first switching valve 22a of the second switching mechanism 22 and the third heat source pipe 25.

The high-pressure refrigerant sent to the fourth communication pipe 8 is then sent to the first branch pipe 63c. The high-pressure refrigerant sent to the first branch pipe 63c is sent to the second heat exchanger 52c of the utilization unit 3c through the first adjustment valve 66c and the junction pipe 62c.

Then, the high-pressure refrigerant sent to the second heat exchanger 52c exchanges heat with indoor air supplied by the second fan 53c in the second heat exchanger 52c. As a result, the carbon dioxide refrigerant flowing through the second heat exchanger 52c radiates heat. The indoor air is heated and supplied into the room, and the heating operation of the utilization unit 3c is performed. The carbon dioxide refrigerant from which heat has been radiated in the second heat exchanger 52c flows through the second utilization pipe 56c, and is flow-adjusted by the utilization-side expansion valve 51c. Thereafter, the carbon dioxide refrigerant having flowed through the second connecting pipe 16c is sent to the third branch pipe 61c of the branch unit 6c.

The carbon dioxide refrigerant sent to the third branch pipe 61c is then sent to the third communication pipe 7.

In addition, the high-pressure refrigerant sent to the second flow path 35a of the cascade heat exchanger 35 radiates heat through heat exchange with the first refrigerant flowing through the first flow path 35b in the cascade heat exchanger 35. The flow rate of the carbon dioxide refrigerant from which heat has been radiated in the cascade heat exchanger 35 is adjusted by the heat source-side expansion valve 36, and then flows into the second receiver 45. Some of the carbon dioxide refrigerant flowing out of the second receiver 45 branches and flows into the second subcooling circuit 48, is decompressed in the second subcooling expansion valve 48a, and then joins the suction flow path 23. In the second subcooling heat exchanger 47, the other part of the refrigerant having flowed out of the second receiver 45 is cooled by the refrigerant flowing through the second subcooling circuit 48, is then sent to the third communication pipe 7 through the fifth shutoff valve 31, and joins the refrigerant from which heat has been radiated in the second heat exchanger 52c.

The refrigerant having joined in the third communication pipe 7 is then branched into two and sent to the third branch pipes 61a and 61b of the branch units 6a and 6b. Thereafter, the refrigerant having flowed through the second connecting pipes 16a and 16b is sent to the second utilization pipes 56a and 56b of the first and second utilization units 3a and 3b. The refrigerant flowing through the second utilization pipes 56a and 56b passes through the utilization-side expansion valves 51a and 51b of the utilization units 3a and 3b.

Then, the refrigerant having passed through the utilization-side expansion valves 51a and 51b, the opening degrees of which are adjusted, exchanges heat with indoor air supplied by the second fans 53a and 53b in the second heat exchangers 52a and 52b. As a result, the refrigerant flowing through the second heat exchangers 52a and 52b is evaporated into a low-pressure gas refrigerant. The indoor air is cooled and supplied into the room. The indoor space is thus cooled. The low-pressure gas refrigerant evaporated in the second heat exchangers 52a and 52b is sent to the junction pipes 62a and 62b of the first and second branch units 6a and 6b.

Then, the low-pressure gas refrigerant sent to the junction pipes 62a and 62b is sent to the fifth communication pipe 9 through the second adjustment valves 67a and 67b and the second branch pipes 64a and 64b to join.

Then, the low-pressure gas refrigerant sent to fifth communication pipe 9 is returned to the suction side of second compressor 21 through the fourth shutoff valve 33, the second heat source pipe 29, the suction flow path 23, the second accumulator 30, and the suction pipe 23a.

In addition, the second refrigerating machine oil circulating in the second circuit 10 is returned from the lower portion of the second accumulator 30 to the suction side of the second compressor 21 through the oil return passage 23b, the oil return valve 23c, and the suction pipe 23a.

In this manner, the behavior in cooling-main operation is performed.

### (8-4) Heating-main operation

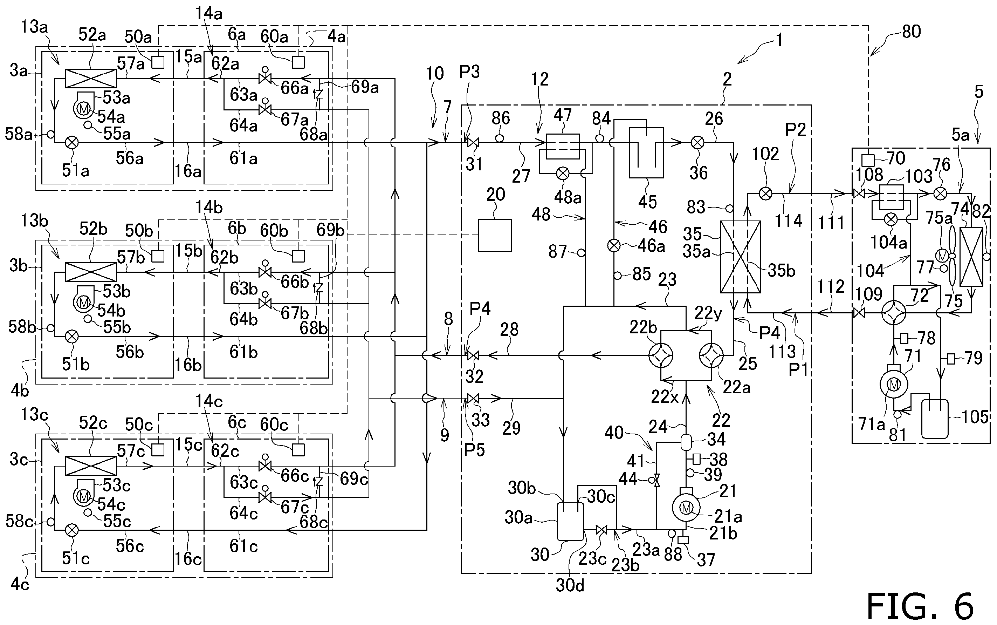

In the heating-main operation, for example, the second heat exchangers 52a and 52b in the utilization units 3a and 3b operate as refrigerant radiators, and the second heat exchanger 52c operates as a refrigerant evaporator. In addition, in the heating-main operation, the cascade heat exchanger 35 functions as an evaporator for the carbon dioxide refrigerant. In this heating-main operation, the first circuit 5a and the second circuit 10 of the refrigeration cycle apparatus 1 are configured as illustrated in FIG. 6. Arrows attached to the first circuit 5a and arrows attached to the second circuit 10 in FIG. 6 indicate the flow of the refrigerant during the heating-main operation.

Specifically, in the first unit 5, the cascade heat exchanger 35 is caused to function as a radiator for the first refrigerant by switching the first switching mechanism 72 to the fifth connection state. The fifth connection state of the first switching mechanism 72 is indicated by the broken lines in the first switching mechanism 72 in FIG. 6. Thus, in the first unit 5, the first refrigerant that has been discharged from the first compressor 71, passed through the first switching mechanism 72, and passed through the first shutoff valve 109 passes through the first communication pipe 112, and is sent to the first flow path 35b of the cascade heat exchanger 35. The refrigerant flowing through the first flow path 35b of the cascade heat exchanger 35 is condensed by heat exchange with the carbon dioxide refrigerant flowing through the second flow path 35a. The first refrigerant condensed in the cascade heat exchanger 35 passes through the second expansion valve 102 controlled to be fully open, thereafter, flows through the second communication pipe 111, the second shutoff valve 108, and the first subcooling heat exchanger 103 in this order, and is decompressed by the first expansion valve 76. Note that during the heating-main operation, the first subcooling expansion valve 104a is controlled to be closed, so that no refrigerant flows in the first subcooling circuit 104, and therefore no heat exchange is performed in the first subcooling heat exchanger 103. Note that the valve opening degree of the first expansion valve 76 is controlled such that the degree of superheating of the refrigerant sucked into the first compressor 71 satisfies a predetermined condition, for example. The refrigerant decompressed in the first expansion valve 76 evaporates through heat exchange with the outside air supplied from the first fan 75 in the first heat exchanger 74, passes through the first switching mechanism 72 and the first accumulator 105, and is sucked into the first compressor 71.

In the cascade unit 2, the second switching mechanism 22 is switched to the second connection state. In the second connection state of the second switching mechanism 22, the discharge flow path 24 and the first heat source pipe 28 are connected by the second switching valve 22b, and the third heat source pipe 25 and the suction flow path 23 are connected by the first switching valve 22a. The cascade heat exchanger 35 thus functions as an evaporator for the carbon dioxide refrigerant. In addition, the opening degree of the heat source-side expansion valve 36 is adjusted. In the first to third branch units 6a, 6b, and 6c, the first adjustment valves 66a and 66b, and the second adjustment valves 67c are controlled to be open, and the first adjustment valve 66c and the second adjustment valves 67a and 67b are controlled to be closed. As a result, the second heat exchangers 52a and 52b of the utilization units 3a and 3b function as refrigerant radiators, and the second heat exchanger 52c of the utilization unit 3c functions as a refrigerant evaporator. Then the second heat exchanger 52c of the utilization unit 3c is connected to the suction side of the second compressor 21 of the cascade unit 2 via the first utilization pipe 57c, the first connecting pipe 15c, the junction pipe 62c, the second branch pipe 64c, and the fifth communication pipe 9. In addition, the second heat exchangers 52a and 52b of the utilization units 3a and 3b is connected to the discharge side of the second compressor 21 of the cascade unit 2 via the discharge flow path 24, the first heat source pipe 28, the fourth communication pipe 8, the first branch pipes 63a and 63b, the junction pipes 62a and 62b, the first connecting pipes 15a and 15b, and the first utilization pipes 57a and 57b. In addition, the second subcooling expansion valve 48a and the bypass expansion valve 46a are controlled to be closed. In the utilization units 3a, 3b, and 3c, the opening degrees of the utilization-side expansion valves 51a, 51b, and 51c are adjusted.

In this second circuit 10, the high-pressure carbon dioxide refrigerant compressed and discharged by the second compressor 21 is sent to the fourth communication pipe 8 through the second switching valve 22b of the second switching mechanism 22, the first heat source pipe 28, and the third shutoff valve 32.

The high-pressure refrigerant sent to the fourth communication pipe 8 is then branched into two and sent to the first branch pipes 63a and 63b of the first branch unit 6a and the second branch unit 6b, which are respectively connected to the first utilization unit 3a and second utilization unit 3b, which are the utilization units in operation. The high-pressure refrigerant sent to the first branch pipes 63a and 63b is sent to the second heat exchangers 52a and 52b of the first utilization unit 3a and the second utilization unit 3b through the first adjustment valves 66a and 66b, the junction pipes 62a and 62b, and the first connecting pipes 15a and 15b.

Then, the high-pressure carbon dioxide refrigerant sent to the second heat exchangers 52a and 52b exchanges heat with the indoor air supplied by the second fans 53a and 53b in the second heat exchangers 52a and 52b. As a result, the refrigerant flowing through the second heat exchangers 52a and 52b radiates heat. The indoor air is heated and supplied into the room. The indoor space is thus heated. The refrigerant from which heat has been radiated in the second heat exchangers 52a and 52b flows through the second utilization pipes 56a and 56b and passes through the utilization-side expansion valves 51a and 51b, the opening degrees of which are adjusted. Thereafter, the refrigerant having flowed through the second connecting pipes 16a and 16b is sent to the third communication pipe 7 via the third branch pipes 61a and 61b of the branch units 6a and 6b.

Some of the refrigerant sent to the third communication pipe 7 is then sent to the third branch pipe 61c of the branch unit 6c, and the remaining refrigerant is sent to the heat source-side expansion valve 36 through the fifth shutoff valve 31.

Then, the refrigerant sent to the third branch pipe 61c flows through the second utilization pipe 56c of the utilization unit 3c via the second connecting pipe 16c, and is sent to the utilization-side expansion valve 51c.

Then, the refrigerant having passed through the utilization-side expansion valve 51c, the opening degree of which is adjusted, exchanges heat with indoor air supplied by the second fan 53c in the second heat exchanger 52c. As a result, the refrigerant flowing through the second heat exchanger 52c is evaporated into a low-pressure gas refrigerant. The indoor air is cooled and supplied into the room. The indoor space is thus cooled. The low-pressure gas refrigerant evaporated in the second heat exchanger 52c passes through the first utilization pipe 57c and the first connecting pipe 15c, and is sent to the junction pipe 62c.

The low-pressure gas refrigerant sent to the junction pipe 62c is then sent to the fifth communication pipe 9 through the second adjustment valve 67c and the second branch pipe 64c.

Then, the low-pressure gas refrigerant sent to fifth communication pipe 9 is returned to the suction side of second compressor 21 through the fourth shutoff valve 33, the second heat source pipe 29, the suction flow path 23, the second accumulator 30, and the suction pipe 23a.

In addition, the carbon dioxide refrigerant sent to the heat source-side expansion valve 36 passes through the heat source-side expansion valve 36, the opening degree of which is adjusted, and then exchanges heat with the first refrigerant flowing through the first flow path 35b in the second flow path 35a of the cascade heat exchanger 35. As a result, the refrigerant flowing in the second flow path 35a of the cascade heat exchanger 35 is evaporated into a low-pressure gas refrigerant and sent to the first switching valve 22a of the second switching mechanism 22. The low-pressure gas refrigerant sent to the first switching valve 22a of the second switching mechanism 22 joins the low-pressure gas refrigerant evaporated in the second heat exchanger 52c in the suction flow path 23. The joined refrigerant is returned to the suction side of the second compressor 21 via the second accumulator 30 and the suction pipe 23a.

In this manner, the behavior in heating-main operation is performed.

Note that during the heating-main operation, the control unit 80 controls the opening degree of the oil return valve 23c on the basis of the degree of superheating (discharge superheat degree) of the carbon dioxide refrigerant discharged from the second compressor 21 so that no liquid refrigerant flows into the second compressor 21.

### (9) Startup control method

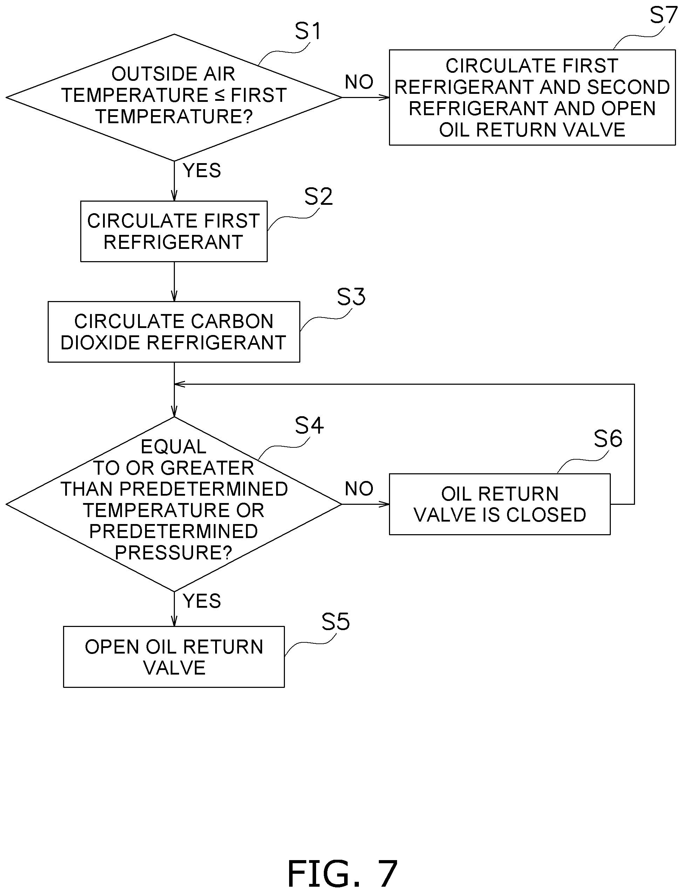

Hereinafter, with reference to FIG. 7, a control method for the startup of the above-mentioned full heating operation and heating-main operation will be described. In the present embodiment, the control unit 80 closes the oil return valve 23c before starting the full heating operation and the heating-main operation.

First, upon receiving a command for heating operation or heating-main operation from a remote controller or the like, the control unit 80 determines whether or not the outside air temperature is equal to or lower than the first temperature (step S1). Upon determining in step S1 that the outside air temperature exceeds the first temperature, the control unit 80 does not perform the startup control and proceeds to step S7 because the density of the carbon dioxide refrigerant and the density of the refrigerating machine oil are in a normal state.

In step S7, the control unit 80 starts the circulation of the first refrigerant in the first circuit 5a, starts the circulation of the carbon dioxide in the second circuit 10, and opens the oil return valve 23c. Here, the control unit 80 starts the first compressor 71 and the second compressor 21 at the same timing and also opens the oil return valve 23c.

Meanwhile, upon determining that the outside air temperature is equal to or lower than the first temperature, the control unit 80 performs the startup control. Specifically, the control unit 80 starts the circulation of the first refrigerant in the first circuit 5a (step S2). In this step S2, the control unit 80 starts the first compressor 71.

Next, the control unit 80 starts the circulation of the carbon dioxide refrigerant in the second circuit 10 (step S3). Step S3 of the present embodiment is performed when the condensation temperature of the first refrigerant in the cascade heat exchanger 35 increases to a predetermined value or more by circulating the first refrigerant in the first circuit 5a. Specifically, the control unit 80 determines whether or not the condensation temperature of the first refrigerant has increased to a predetermined value or more. Upon determining that the condensation temperature of the first refrigerant is less than the predetermined value, the control unit 80 does not circulate the carbon dioxide in the second circuit 10. Meanwhile, upon determining that the condensation temperature of the first refrigerant is equal to or higher than the predetermined value, the control unit 80 starts second compressor 21 to start the circulation of the carbon dioxide refrigerant in second circuit 10.

Next, the control unit 80 determines whether or not the temperature or pressure of the carbon dioxide refrigerant and the refrigerating machine oil in the second accumulator 30 is equal to or higher than a predetermined temperature or predetermined pressure corresponding to a boundary temperature at which the density of the carbon dioxide refrigerant and the density of the refrigerating machine oil in the second accumulator 30 become equal (step S4). Here, the control unit 80 acquires, from at least one of the second suction temperature sensor 88 and the second suction pressure sensor 37, the temperature or pressure of the carbon dioxide refrigerant and second refrigerating machine oil flowing through the suction pipe 23a, to make the above determination.

Upon determining in step S4 that the temperature or pressure of the carbon dioxide refrigerant and the second refrigerating machine oil in the second accumulator 30 is equal to or higher than the predetermined temperature or the predetermined pressure, the control unit 80 opens the oil return valve 23c because the density of the carbon dioxide refrigerant and the density of the refrigerating machine oil are in a normal state (step S5).

Meanwhile, upon determining in step S4 that the temperature or pressure of the carbon dioxide refrigerant and the second refrigerating machine oil in the second accumulator 30 is lower than the predetermined temperature or the predetermined pressure, the control unit 80 maintains the oil return valve 23c in the closed state because the density of the carbon dioxide refrigerant and the density of the refrigerating machine oil in the second accumulator 30 are inverted (step S6). Then the processing returns to the step (step S4) of determining that the temperature or pressure of the carbon dioxide refrigerant and the second refrigerating machine oil in the second accumulator 30 is equal to or higher than the predetermined temperature or the predetermined pressure.

### (10) Features

(10-1)
The refrigeration cycle apparatus 1 according to the present embodiment includes the first circuit 5a, the second circuit 10, the cascade heat exchanger 35, and the control unit 80. The first circuit 5a circulates the first refrigerant. The second circuit 10 circulates the carbon dioxide refrigerant and the refrigerating machine oil (second refrigerating machine oil in the present embodiment). The cascade heat exchanger 35 heats the carbon dioxide refrigerant with the first refrigerant. The second circuit 10 includes the second compressor 21, the container (second accumulator 30 in the present embodiment), the suction pipe 23a, the oil return passage 23b, and the valve (oil return valve 23c in the present embodiment). The second accumulator 30 is provided on the suction side of the second compressor 21, and stores the carbon dioxide refrigerant and the refrigerating machine oil. The suction pipe 23a connects the suction side of the second compressor 21 to the second accumulator 30. The oil return passage 23b returns the second refrigerating machine oil from the lower portion of the second accumulator 30 to the suction pipe 23a. The oil return valve 23c is provided in the oil return passage 23b. After starting the circulation of the first refrigerant in the first circuit 5a, the control unit 80 performs startup control to open the oil return valve 23c.

At the startup of the operation in which the carbon dioxide refrigerant is heated by the first refrigerant (full heating operation and heating-main operation in the present embodiment), the temperature of the carbon dioxide refrigerant in the second accumulator 30 may be low due to low outside air temperature. In such a case, the refrigeration cycle apparatus 1 according to the present embodiment can raise the temperature of the carbon dioxide refrigerant in the container of the second circuit 10 via the cascade heat exchanger 35 by starting the circulation of the first refrigerant in the first circuit 5a. Therefore, even if the outside air temperature is low, the interior of the second accumulator 30 can be brought into a normal state in which the density of the carbon dioxide refrigerant is lower than the density of the refrigerating machine oil. Since the oil return valve 23c in the oil return passage 23b extending from the lower portion of the second accumulator 30 is opened after the normal state is reached, the inflow of liquid-phase carbon dioxide refrigerant into the oil return passage 23b can be suppressed. Therefore, the inflow of liquid refrigerant into the second compressor 21 can be suppressed.

As described above, even if the outside air temperature is low, the startup control can bring the interior of the second accumulator 30 into a normal state in which the density of the carbon dioxide refrigerant is lower than the density of the refrigerating machine oil. Therefore, in the refrigeration cycle apparatus 1 according to the present embodiment, even if a member for heating the second accumulator 30 is omitted, the inflow of liquid refrigerant into the second compressor 21 can be suppressed.

(10-2)
The refrigeration cycle apparatus 1 according to the present embodiment is the refrigeration cycle apparatus 1 according to (10-1) described above, in which during the startup control, the control unit 80 opens the oil return valve 23c when the temperature or pressure of the carbon dioxide refrigerant and the refrigerating machine oil in the second accumulator 30 becomes equal to or higher than a predetermined temperature or predetermined pressure corresponding to a boundary temperature at which the density of the carbon dioxide refrigerant and the density of the refrigerating machine oil in the second accumulator 30 become equal.

Here, when the temperature or pressure of the carbon dioxide refrigerant and the refrigerating machine oil in the second accumulator 30 becomes equal to or higher than the predetermined temperature or predetermined pressure corresponding to the boundary temperature at which the density of the carbon dioxide refrigerant and the density of the refrigerating machine oil in the second accumulator 30 become equal, it can be determined that the density of the refrigerant and the density of the refrigerating machine oil in the second accumulator 30 are in a normal state. Therefore, the inflow of liquid refrigerant into the second compressor 21 can be further suppressed.

(10-3)
The refrigeration cycle apparatus 1 according to the present embodiment is the refrigeration cycle apparatus 1 according to (10-1) or (10-2) described above, in which during the startup control, the control unit 80 starts the circulation of the carbon dioxide refrigerant in the second circuit 10 after starting the circulation of the first refrigerant in the first circuit 5a.

Here, by starting the circulation of the first refrigerant in the first circuit 5a, the temperature of the carbon dioxide refrigerant in the second accumulator 30 of the second circuit 10 is raised via the cascade heat exchanger 35, and then the circulation of the carbon dioxide refrigerant in the second circuit 10 is started. Therefore, the efficiency of the operation of the second circuit 10 can be improved.

(10-4)
The refrigeration cycle apparatus 1 according to the present embodiment is the refrigeration cycle apparatus 1 according to (10-3) described above, in which during the startup control, the control unit 80 opens the oil return valve 23c after starting the circulation of the carbon dioxide refrigerant in the second circuit 10.

Here, the first refrigerant circulates in the first circuit 5a and the carbon dioxide refrigerant circulates in the second circuit 10, so that the temperature of the carbon dioxide refrigerant in the second accumulator 30 can be efficiently raised. This makes it easy to bring the density of the refrigerant and the density of the refrigerating machine oil in the second accumulator 30 into a normal state. Since the oil return valve 23c in the oil return passage 23b is opened after the normal state is reached, the inflow of liquid refrigerant into the second compressor 21 can be easily suppressed.

(10-5)
The refrigeration cycle apparatus 1 according to the present embodiment is any one of the refrigeration cycle apparatuses 1 of (10-1) to (10-4) described above, in which the control unit 80 performs the startup control when outside air temperature is equal to or lower than a first temperature, and does not perform the startup control when the outside air temperature exceeds the first temperature.

Here, if the density of the refrigerant and the density of the refrigerating machine oil in the second accumulator 30 are in an abnormal state due to the outside air temperature being equal to or lower than the first temperature, the inflow of liquid refrigerant into the second compressor 21 can be suppressed by performing the startup control. Meanwhile, if the density of the refrigerant and the density of the refrigerating machine oil in the second accumulator 30 are in a normal state due to the outside air temperature exceeding the first temperature, the inflow of liquid refrigerant into the second compressor 21 can be suppressed without closing the oil return valve 23c in the oil return passage 23b.

(10-6)
The refrigeration cycle apparatus 1 according to the present embodiment is the refrigeration cycle apparatus 1 according to (10-5) described above, in which the control unit 80 simultaneously starts operation of the first circuit 5a, operation of the second circuit 10, and opening of the oil return valve 23c when the outside air temperature exceeds the first temperature.

Here, if the density of the refrigerant and the density of the refrigerating machine oil in the second accumulator 30 are in an abnormal state due to the outside air temperature being equal to or lower than the first temperature, by performing startup control to open the oil return valve 23c after the first circuit 5a starts operating, it is possible to suppress the inflow of liquid refrigerant into the second compressor 21. Meanwhile, if the density of the refrigerant and the density of the refrigerating machine oil in the second accumulator 30 are in a normal state due to the outside air temperature exceeding the first temperature, the start of operation of the first circuit 5a, the start of operation of the second circuit 10, and the opening of the oil return valve 23c in the oil return passage 23b may be performed simultaneously.

(10-7)
The refrigeration cycle apparatus 1 according to the present embodiment is any one of the refrigeration cycle apparatuses 1 according to (10-1) to (10-6) described above, in which the first refrigerant is R32.

Here, the circulation of R32 through the first circuit 5a allows efficient heat exchange with the carbon dioxide refrigerant in the cascade heat exchanger 35.

### (11) Modifications

### (11-1) Modification 1

In the above embodiment, when starting the full heating operation or the heating-main operation, the control unit 80 performs startup control to circulate the first refrigerant in the first circuit 5a, then circulate the carbon dioxide refrigerant in the second circuit 10, and then open the oil return valve 23c, but the present disclosure is not limited thereto. In the present modification, when starting the full heating operation or the heating-main operation, the control unit 80 performs startup control to circulate the first refrigerant in the first circuit 5a, then open the oil return valve 23c, and then circulate the carbon dioxide refrigerant in the second circuit 10.

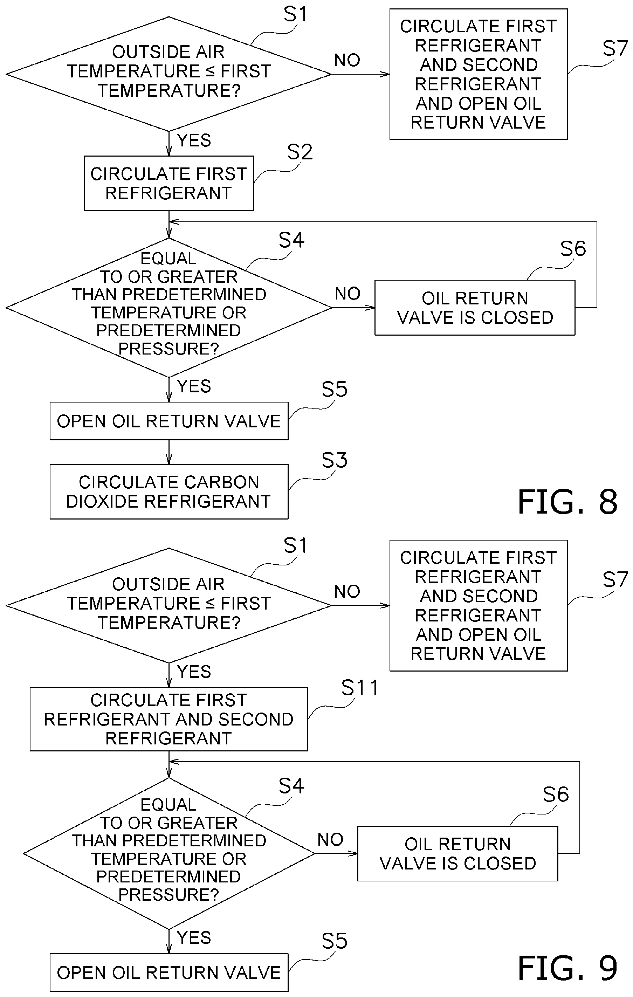

Specifically, as illustrated in FIG. 8, the control unit 80 first determines whether or not the outside air temperature is equal to or lower than the first temperature (step S1). Upon determining in step S1 that the outside air temperature exceeds the first temperature, the control unit 80 simultaneously starts the operation of the first circuit 5a, the operation of the second circuit 10, and the opening of the oil return valve 23c because the density of the carbon dioxide refrigerant and the density of the refrigerating machine oil are in a normal state (step S7).

Meanwhile, upon determining in step S1 that the outside air temperature is equal to or lower than the first temperature, the control unit 80 performs the startup control. Specifically, the control unit 80 starts the circulation of the first refrigerant in the first circuit 5a (step S2).

Next, the control unit 80 determines whether or not the temperature or pressure of the carbon dioxide refrigerant and the refrigerating machine oil in the second accumulator 30 is equal to or higher than a predetermined temperature or predetermined pressure corresponding to a boundary temperature at which the density of the carbon dioxide refrigerant and the density of the refrigerating machine oil in the second accumulator 30 become equal (step S4).

Upon determining in step S4 that the temperature or pressure of the carbon dioxide refrigerant and the second refrigerating machine oil in the second accumulator 30 is lower than the predetermined temperature or the predetermined pressure, the control unit 80 maintains the oil return valve 23c in the closed state because the density of the carbon dioxide refrigerant and the density of the refrigerating machine oil in the second accumulator 30 are inverted (step S6). Then the processing returns to the step (step S4) of determining that the temperature or pressure of the carbon dioxide refrigerant and the second refrigerating machine oil in the second accumulator 30 is equal to or higher than the predetermined temperature or the predetermined pressure.

Meanwhile, upon determining in step S4 that the temperature or pressure of the carbon dioxide refrigerant and the second refrigerating machine oil in the second accumulator 30 is equal to or higher than the predetermined temperature or the predetermined pressure, the control unit 80 opens the oil return valve 23c because the density of the carbon dioxide refrigerant and the density of the refrigerating machine oil are in a normal state (step S5).

Next, the control unit 80 starts the circulation of the carbon dioxide refrigerant in the second circuit 10 (step S3).

### (11-2) Modification 2

In the above embodiment, when starting the full heating operation or the heating-main operation, the control unit 80 performs startup control to circulate the first refrigerant in the first circuit 5a, then circulate the carbon dioxide refrigerant in the second circuit 10, and then open the oil return valve 23c, but the present disclosure is not limited thereto. In the present modification, when starting the full heating operation or the heating-main operation, the control unit 80 performs startup control to simultaneously operate the first circuit 5a and the second circuit 10.

Specifically, as illustrated in FIG. 9, the control unit 80 first determines whether or not the outside air temperature is equal to or lower than the first temperature (step S1). Upon determining in step S1 that the outside air temperature exceeds the first temperature, the control unit 80 simultaneously starts the operation of the first circuit 5a, the operation of the second circuit 10, and the opening of the oil return valve 23c because the density of the carbon dioxide refrigerant and the density of the refrigerating machine oil are in a normal state (step S7).

Meanwhile, upon determining in step S1 that the outside air temperature is equal to or lower than the first temperature, the control unit 80 proceeds to step S11 to perform the startup control.

In step S11, the first refrigerant is started to circulate in the first circuit 5a, and the carbon dioxide is started to circulate in the second circuit 10. Here, the first compressor 71 and the second compressor 21 are simultaneously started.

Next, the control unit 80 determines whether or not the temperature or pressure of the carbon dioxide refrigerant and the refrigerating machine oil in the second accumulator 30 is equal to or higher than a predetermined temperature or predetermined pressure corresponding to a boundary temperature at which the density of the carbon dioxide refrigerant and the density of the refrigerating machine oil in the second accumulator 30 become equal (step S4).

Upon determining in step S4 that the temperature or pressure of the carbon dioxide refrigerant and the second refrigerating machine oil in the second accumulator 30 is lower than the predetermined temperature or the predetermined pressure, the control unit 80 maintains the oil return valve 23c in the closed state because the density of the carbon dioxide refrigerant and the density of the refrigerating machine oil in the second accumulator 30 are inverted (step S6). Then the processing returns to the step (step S4) of determining that the temperature or pressure of the carbon dioxide refrigerant and the second refrigerating machine oil in the second accumulator 30 is equal to or higher than the predetermined temperature or the predetermined pressure.

Meanwhile, upon determining in step S4 that the temperature or pressure of the carbon dioxide refrigerant and the second refrigerating machine oil in the second accumulator 30 is equal to or higher than the predetermined temperature or the predetermined pressure, the control unit 80 opens the oil return valve 23c because the density of the carbon dioxide refrigerant and the density of the refrigerating machine oil are in a normal state (step S5).

As described above, the refrigeration cycle apparatus 1 according to the present modification is the refrigeration cycle apparatus 1 according to (10-1) or (10-2) described above, in which the control unit 80 simultaneously starts the operation of the first circuit 5a and the operation of the second circuit 10 in the startup control.

As described above, the circulation of the first refrigerant in the first circuit 5a and the circulation of the carbon dioxide refrigerant in the second circuit 10 may be performed simultaneously.

Note that "simultaneously" means, for example, that the control unit 80 issues a command to start the first compressor 71 and the second compressor 21 at the same timing. This includes a case where the circulation of the first refrigerant in the first circuit 5a and the circulation of the carbon dioxide refrigerant in the second circuit 10 are started at exactly the same time, and a case where one of them is started slightly earlier.

### (11-3) Modification 3

In the above embodiment, the control unit 80 closes the oil return valve 23c before starting the full heating operation and the heating-main operation, but the present disclosure is not limited thereto. The oil return valve 23c may be opened before the full heating operation and the heating-main operation are started. In the present modification, if the evaporation temperature of the carbon dioxide refrigerant in the cascade heat exchanger 35 is equal to or higher than a predetermined value, the oil return valve 23c is opened before the circulation of the carbon dioxide refrigerant in the second circuit 10.

### (11-4) Modification 4

In the above embodiment, when the outside air temperature exceeds the first temperature, the control unit 80 simultaneously starts the operation of the first circuit 5a, the operation of the second circuit 10, and the opening of the oil return valve 23c, but the present disclosure is not limited thereto. In the refrigeration cycle apparatus according to the present disclosure, when the outside air temperature exceeds the first temperature, the control unit 80 can optionally instruct the order of the start of operation of first circuit 5a, the start of operation of the second circuit 10, and the opening of the oil return valve 23c. In the present modification, when the outside air temperature exceeds the first temperature, the first circuit 5a and the second circuit 10 are simultaneously started, and the oil return valve 23c is opened before or after the startup of the first circuit 5a and the second circuit 10.

### (11-5) Modification 5

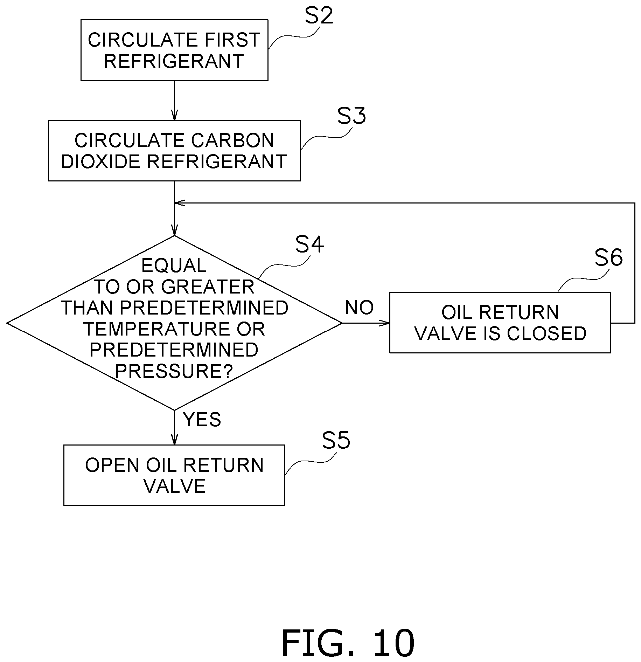

In the above embodiment and Modifications 1 to 4, the control unit 80 performs startup control when the outside air temperature is equal to or lower than the first temperature, but the present disclosure is not limited thereto. In the present modification, the control unit 80 performs startup control when starting the full heating operation or the heating-main operation, regardless of the outside air temperature. In other words, as illustrated in FIG. 10, the step (step S1) of determining whether or not the outside air temperature is equal to or lower than the first temperature in FIGS. 7 to 10 is omitted.

### (11-6) Modification 6

In the above embodiment and Modifications 1 to 5, the control unit 80 opens the oil return valve 23c when the temperature or pressure of the carbon dioxide refrigerant and the refrigerating machine oil in the second accumulator 30 becomes equal to or higher than the predetermined temperature or predetermined pressure corresponding to the boundary temperature at which the density of the carbon dioxide refrigerant and the density of the refrigerating machine oil in the second accumulator 30 become equal. However, the present disclosure is not limited thereto. In the present modification, the control unit 80 opens the oil return valve 23c after a predetermined time has elapsed after starting the circulation of the first refrigerant in the first circuit 5a. Note that the predetermined time is the time for raising the temperature of the carbon dioxide refrigerant so that the interior of the second accumulator 30 is brought into a normal state by circulating the first refrigerant.

### (11-7) Modification 7

In the above embodiment, the control unit 80 performs the startup control when starting the full heating operation and the heating-main operation, but the present disclosure is not limited thereto. In the refrigeration cycle apparatus according to the present disclosure, the control unit 80 may perform the startup control when starting the full heating operation or the heating-main operation. In addition, in the refrigeration cycle apparatus according to the present disclosure, the control unit 80 may further perform the startup control when starting at least one of the full cooling operation and the cooling-main operation.

### (11-8) Modification 8

In the above embodiment, the polyalkylene glycol has been described as an example of the second refrigerating machine oil used in the second circuit 10, but the present disclosure is not limited thereto. The second refrigerating machine oil according to the present disclosure may be incompatible with the carbon dioxide refrigerant at all, or may be weakly compatible with the carbon dioxide refrigerant, dissolving a little but not much.

### (11-9) Modification 9

In the above embodiment, R32 has been described as an example of the first refrigerant used in the first circuit 5a, but the present disclosure is not limited thereto. The first refrigerant used in the first circuit 5a may be, for example, R32, R454C, propane, R1234yf, R1234ze, ammonia, or a refrigerant containing any of these.

### (11-10) Modification 10

In the above embodiment, the second circuit 10 has the three communication pipes 7, 8, and 9, but the present disclosure is not limited thereto. The refrigeration cycle apparatus according to the present modification has two communication pipes. The present modification is applied to, for example, a configuration in which the plurality of utilization units 3a, 3b, and 3c are not capable of individual cooling or heating operation, and a configuration in which there is only one second unit.

### (11-11) Modification 11

In the above embodiment, the refrigeration cycle apparatus 1 with the single cascade unit 2 connected to the single first unit 5 has been described as an example. However, the present disclosure is not limited to this. In the refrigeration cycle apparatus 1 according to the present modification, the plurality of cascade units 2 are connected in parallel to the single first unit 5.

### (11-12) Modification 12

In the above embodiment, the refrigeration cycle apparatus 1 with the plurality of second units 4a, 4b, 4c connected to the single cascade unit 2 has been described as an example. However, the present disclosure is not limited to this. In the refrigeration cycle apparatus according to the present modification, the single second unit is connected to the single cascade unit 2.

### (11-13) Modification 13

In the above embodiment, as the first unit 5, an outdoor unit having the first fan 75 for supplying the first heat exchanger 74 with outdoor air that exchanges heat with the first refrigerant has been described as an example, but the present disclosure is not limited to this example. In the present modification, the first unit does not have the first fan 75 and causes the first heat exchanger 74 to perform heat exchange between the first refrigerant and water as a heat source.

While the embodiment of the present disclosure has been described above, it will be understood that various changes in forms and details can be made without departing from the spirit and scope of the present disclosure recited in the claims.

### REFERENCE SIGNS LIST

1: refrigeration cycle apparatus
5a: First circuit
10: Second circuit
21: second compressor
23a: suction pipe
23b: oil return passage
23c: oil return valve (valve)
30: second accumulator (container)
35: cascade heat exchanger
52a, 52b, 52c: second heat exchanger
71: first compressor
74: first heat exchanger
80: Control unit

### CITATION LIST

### PATENT LITERATURE

Patent Literature 1: Japanese Patent No. 5425221

## Claims

1. A refrigeration cycle apparatus (1) comprising:
a first circuit (5a) that circulates a first refrigerant;
a second circuit (10) that circulates a carbon dioxide refrigerant and refrigerating machine oil;
a cascade heat exchanger (35) that heats the carbon dioxide refrigerant with the first refrigerant; and
a control unit (80),
wherein the second circuit includes
a second compressor (21),
a container (30) that is provided on a suction side of the second compressor and that stores the carbon dioxide refrigerant and the refrigerating machine oil,
a suction pipe (23a) that connects the suction side of the second compressor to the container,
an oil return passage (23b) that returns the refrigerating machine oil from a lower portion of the container to the suction pipe, and
a valve (23c) provided in the oil return passage, and
the control unit performs startup control to open the valve after starting the circulation of the first refrigerant in the first circuit.

2. The refrigeration cycle apparatus according to claim 1, wherein the control unit opens the valve when a temperature or pressure of the carbon dioxide refrigerant and the refrigerating machine oil in the container becomes equal to or higher than a predetermined temperature or predetermined pressure corresponding to a boundary temperature at which a density of the carbon dioxide refrigerant and a density of the refrigerating machine oil in the container become equal.

3. The refrigeration cycle apparatus according to claim 1 or 2, wherein the control unit starts the circulation of the carbon dioxide refrigerant in the second circuit after starting the circulation of the first refrigerant in the first circuit.

4. The refrigeration cycle apparatus according to claim 3, wherein the control unit opens the valve after starting the circulation of the carbon dioxide refrigerant in the second circuit.

5. The refrigeration cycle apparatus according to claim 1 or 2, wherein the control unit simultaneously starts operation of the first circuit and operation of the second circuit.

6. The refrigeration cycle apparatus according to any one of claims 1 to 5, wherein the control unit performs the startup control when outside air temperature is equal to or lower than a first temperature, and does not perform the startup control when the outside air temperature exceeds the first temperature.

7. The refrigeration cycle apparatus according to claim 6, wherein the control unit simultaneously starts operation of the first circuit, operation of the second circuit, and opening of the valve when the outside air temperature exceeds the first temperature.

8. The refrigeration cycle apparatus according to any one of claims 1 to 7, wherein the first refrigerant contains R32, R454C, propane, R1234yf, R1234ze, or ammonia.
